# EUROPEAN PATENT APPLICATION

(11) **EP 4 697 478 A1**
(43) Date of publication of application: **18.02.2026**
(21) Application number: 23929691.6
(22) Date of filing: 19.06.2023
(51) Int. Cl.: H01M 50/358, H01M 50/471

(54) **BATTERY CELL, BATTERY AND ELECTRIC DEVICE**

(30) Priority: 31.03.2023 CN 202310341097
(71) Applicant: Contemporary Amperex Technology (Hong Kong) Limited, Hong Kong (HK)
(72) Inventor: KE, Haibo, Ningde, Fujian 352100 (CN); YAN, Han, Ningde, Fujian 352100 (CN); CHEN, Yanlin, Ningde, Fujian 352100 (CN); LI, Quankun, Ningde, Fujian 352100 (CN); XING, Chengyou, Ningde, Fujian 352100 (CN); WANG, Peng, Ningde, Fujian 352100 (CN); JIN, Haizu, Ningde, Fujian 352100 (CN)
(74) Representative: Gong, Jinping
(86) International application number: PCT/CN2023/101153
(87) International publication number: WO 2024/198114

(57) **Abstract**

Disclosed in the present application are a battery cell, a battery and an electric device. The battery cell comprises a housing, an electrode assembly and an exhaust structure, wherein the housing is provided with an inner cavity, and the housing is provided with a first wall; the electrode assembly is arranged in the inner cavity; and the exhaust structure is arranged between the first wall and the electrode assembly, and is provided with a fluid channel. According to the embodiment of the present application, the exhaust structure is arranged in the inner cavity, and the exhaust structure is mounted between the electrode assembly and the first wall of the housing, such that the fluid channel in the exhaust structure can be used as a passage for airflow to flow, blocking of the airflow by means of the exhaust structure arranged between the first wall and the electrode assembly can be reduced, enabling the airflow to flow to a preset position through the fluid channel, and thus improving the reliability of the battery cell.

## Description

### CROSS-REFERENCE TO RELATED APPLICATION

The present application claims priority to Chinese Patent Application No. 202310341097.1 filed on March 31, 2023 and entitled "BATTERY CELL, BATTERY AND ELECTRIC DEVICE", the content of which is incorporated herein by reference in its entirety.

### TECHNICAL FIELD

The present application relates to the field of batteries, and in particular, to a battery cell, a battery, and an electric device.

### BACKGROUND

Batteries are widely used in various fields of production and life. The battery pack includes a battery cell, and the battery cell includes a housing and a pressure relief mechanism provided on the housing. In the case of the thermal runaway of the battery cell, the pressure relief mechanism is actuated. The improvement of the timeliness in activating the pressure relief mechanism is particularly important for the reliability of battery cells.

### SUMMARY

The present application mainly aims to provide a battery cell and is intended to improve the flow performance of airflow in the battery cell and thereby to improve the reliability of the battery cell.

In order to achieve the above object, the present application provides a battery cell including:
a housing, having an inner cavity and having a first wall;
an electrode assembly, disposed in the inner cavity; and
an exhaust structure, disposed between the first wall and the electrode assembly and provided with a fluid channel.

In the examples of the present application, by disposing the exhaust structure in the inner cavity, installing the exhaust structure between the electrode assembly and the first wall of the housing, and using the fluid channel on the exhaust structure as a passage for the flowing of airflow, the blocking of the airflow by the exhaust structure disposed between the first wall and the electrode assembly can be reduced, such that the airflow can flow toward a preset position through the fluid channel, thus improving the reliability of the battery cell.

In some examples, the fluid channel is in communication with the edge of the exhaust structure in a first direction, and the first direction intersects with the thickness direction of the first wall.

In this example, the first direction intersects with the thickness direction of the first wall, and the airflow at the outer side of the edge of the exhaust structure in the first direction can enter the fluid channel to flow toward the preset position by allowing the fluid channel to be in communication with the edge of the exhaust structure in the first direction.

In some examples, the housing includes a second wall. A first gap is formed between the outer peripheral surface of the electrode assembly and the second wall, and the fluid channel is in communication with the first gap.

In this example, the fluid channel is in communication with the first gap formed between the outer peripheral surface of the electrode assembly and the second wall, such that the fluid channel can serve as a channel through which the first gap is in communication with the preset position, and the airflow in the first gap can flow toward the preset position, thereby increasing the flowing of airflow between the outer peripheral surface of the electrode assembly and different positions inside the battery cell. In one aspect, this can improve the reliability of the battery cell; in another aspect, this can enable the heat at the outer peripheral surface of the electrode assembly to be diverted and dispersed to the preset position inside the battery cell, and thereby the problem of local overheating at the outer peripheral surface of the electrode assembly can be reduced.

In some examples, a second gap is formed between the outer peripheral surface of the exhaust structure and the second wall of the housing, and the fluid channel is in communication with the second gap.

In this example, the fluid channel is in communication with the second gap between the outer peripheral surface of the exhaust structure and the second wall, such that the fluid channel can serve as a channel through which the second gap is in communication with the preset position, and thereby the airflow in the second gap can flow toward the preset position, thus increasing the flowing of airflow between the outer peripheral surface of the exhaust structure and different positions inside the battery cell.

In some examples, the housing includes a second wall, a first gap is formed between the outer peripheral surface of the electrode assembly and the second wall, the fluid channel is in communication with the first gap, a second gap is formed between the outer peripheral surface of the exhaust structure and the second wall of the housing, and the fluid channel is in communication with the second gap.

In this example, the fluid channel is in communication with the first gap and the second gap. In one aspect, this can facilitate the guiding of the airflow at the outer peripheral surface of the electrode assembly toward the preset position in the battery cell, thus improving and promoting the reliability of the battery cell; in another aspect, this can facilitate the guiding of the airflow at the peripheral surface of the exhaust structure toward the preset position in the battery cell, thus improving the flowability of the airflow inside the battery cell and reducing the problem of local overheating inside the battery cell.

In some examples, the exhaust structure includes a plate body. The plate body includes a first surface disposed along the thickness direction of the plate body, and the fluid channel is disposed on the first surface.

In this example, since the first surface is a surface in the thickness direction of the plate body and the fluid channel is disposed on the first surface, the total area of the path of the fluid channel can be increased, such that the airflow in the battery cell can have a more sufficient flow space, and the flowability of the airflow can be further improved.

In some examples, the first surface is provided with a supporting block, and a fluid channel is formed around the supporting block.

In this example, by providing the supporting block, in one aspect, the size of the fluid channel can be easily designed as required, and in another aspect, the overall thickness of the exhaust structure may be increased by the supporting block, thereby increasing the distance of the gap between the electrode assembly and the first wall to reduce the possibility of the electrode assembly contacting the first wall.

In some examples, the first surface is provided with a plurality of supporting blocks, and a fluid channel is formed between the supporting blocks.

In this example, by providing a plurality of supporting blocks, in one aspect, the force applied to the first wall by the electrode assembly can be dispersed, which helps to reduce the deformation of the plate body due to stress concentration, and in another aspect, through forming the fluid channel between the plurality of supporting blocks, the space between the supporting blocks can be fully utilized, which facilitates the shaping of the fluid channel while promoting the structural strength of the exhaust structure.

In some examples, the plurality of supporting blocks satisfy at least one of the following conditions:
the plurality of supporting blocks are arranged in an array;
the plurality of supporting blocks are arranged along the width direction of the plate body;
the plurality of supporting blocks are arranged along the length direction of the plate body; and
the supporting block is a rectangular block or a cylinder.

In this example, when the plurality of supporting blocks are arranged in an array, the simplification of the shaping mold for the plurality of supporting blocks can be facilitated and the integral shaping of the exhaust structure can be facilitated.

In this example, when the plurality of supporting blocks are arranged in the width direction or the length direction of the plate body, the supporting blocks can be easily installed or formed along the length direction or the width direction of the plate body; when the supporting blocks are provided independently from the plate body, the forming equipment of the supporting blocks and the plate body can be simplified, and meanwhile, when the supporting blocks and the plate body are connected and fixed, the corresponding equipment can be controlled to move in a relatively fixed path, such that the control of the processing equipment of the supporting blocks and the plate body can be simplified; when the supporting blocks are provided integrally with the plate body, the forming equipment can be simplified, such that the production efficiency of the exhaust structure is improved.

In this example, when the supporting block is rectangle or cylindrical, the shaping of the supporting block can be facilitated, and the contact area between the supporting block and the external structure can be increased, thus improving the stability of the exhaust structure.

In some examples, the plate body is provided with a via. The via penetrates through the plate body along the thickness direction of the plate body, and the via is in communication with the fluid channel.

In this example, by disposing the via in a penetrating manner along the thickness direction of the plate body, the via can be used for the flowing of airflow on the two surfaces of the plate body in the thickness direction, and further more airflow can be guided to the fluid channel, thus improving the flow performance of the airflow.

In some examples, the via is arranged in an at least partially staggered manner relative to the supporting block.

In this example, by arranging the via in an at least partially staggered manner relative to the supporting block, the via is not shielded by the external structure when the supporting block is in contact with the external structure, such that the via can be kept in a relatively good communicating state.

In some examples, there are a plurality of columns of supporting blocks, with the via disposed between two adjacent columns of supporting blocks.

In this example, by using a plurality of columns of supporting blocks, in one aspect, the problem of stress concentration of the plate body can be reduced, and the possibility of deformation of the plate body is further reduced; in another aspect, disposing the via between two adjacent columns of supporting blocks can enable the via to be in communication with the fluid channel between adjacent supporting blocks, and thereby the flowing of airflow on the two surfaces of plate body in the thickness direction can be promoted.

In some examples, the first surface faces the first wall.

In this example, the first surface is provided with the supporting block, and the first surface is disposed facing the first wall. In one aspect, the acting force of the supporting block on the electrode assembly can be reduced, and the possibility of the damage to the electrode assembly due to stress concentration is reduced; in another aspect, disposing a fluid channel between the plate body and the first wall can guide the airflow to a preset position on the first wall more quickly.

In some examples, the battery cell further includes an insulating film. The insulating film is wrapped outside the electrode assembly, and the insulating film is provided with a first through hole. The exhaust structure is disposed between the insulating film and the first wall, the exhaust structure is provided with a second through hole, and the second through hole is aligned with the first through hole.

In this example, the insulating film is wrapped outside the periphery of the electrode assembly to serve as a barrier between the electrode assembly and the housing. In this example, the positioning and installation of the insulating film and the exhaust structure can be facilitated by providing a first through hole on the insulating film and providing a second through hole on the exhaust structure, as well as allowing the first through hole and the second through hole to be disposed aligned with each other.

In some examples, the second through hole is disposed on the supporting block.

In this example, by disposing the second through hole on the supporting block, the blocking of the second through hole can be facilitated.

In some examples, the supporting block is a hollow structure protruding with respect to the plate body, the second through hole is disposed on a bottom wall of the supporting block, and the bottom wall of the supporting block abuts against the first wall.

In this example, in one aspect, the supporting block is a hollow structure, which can reduce the weight of the exhaust structure and improve the energy density of the battery cell; in another aspect, the bottom wall of the supporting block abuts against the first wall, such that the stability of the exhaust structure in the battery cell can be improved; in yet another aspect, as the second through hole is disposed in the bottom wall of the supporting block, when the supporting block abuts against the first wall, the blocking of the second through hole is facilitated.

In some examples, the battery cell further includes an insulating sheet. The insulating sheet includes a first portion, and the first portion is disposed at least partially on a side of the exhaust structure distal to the electrode assembly and covers the second through hole.

In this example, allowing the insulating sheet to at least partially shield the second through hole can reduce the probability that powders of the electrode assembly pass through the second through hole.

In some examples, the first portion is attached at the opening of the second through hole.

In this example, allowing the first portion of the insulating sheet to be attached at the opening of the second through hole can close the opening of the second through hole to prevent powders from passing through the second through hole.

In some examples, in the width direction of the plate body, the first portion is at a preset distance from at least one edge of the plate body in the width direction.

In this example, allowing the first portion of the insulating sheet to be at a preset distance from the edge of the plate body reduces the blocking of the fluid channel at the edge of the plate body by the insulating sheet, thus improving the flow performance of airflow.

In some examples, in the width direction of the plate body, the supporting block is at a preset distance from at least one edge of the plate body in the width direction.

In this example, allowing the supporting block to be at a preset distance from the edge of the plate body in the width direction enables the presence of the fluid channel at the edge of the plate body in the width direction, such that the exhaust structure has better exhaust performance.

In some examples, in the width direction of the plate body, the supporting block is at a preset distance from at least one edge of the plate body in the width direction, and the first portion is at a preset distance from at least one edge of the plate body in the width direction.

In this example, the supporting block and the insulating sheet are both at a preset distance from the supporting block relative to the edge of the plate body in the width direction, and the supporting block and the insulating sheet do not completely block the fluid channel at the edge of the plate body in the width direction, thus enabling the exhaust structure to have better exhaust performance.

In some examples, the insulating film is folded to wrap the electrode assembly and forms a first folded edge and a second folded edge overlapping each other at a side of the electrode assembly; the insulating sheet further includes a second portion, the second portion is connected to the first portion, and the second portion fixes the first folded edge and the second folded edge.

In this example, the insulating film is folded to wrap the electrode assembly to provide insulating protection for the outer peripheral surface of the electrode assembly, and the insulating sheet wraps a side of the electrode assembly by allowing the insulating film to form a first folded edge and a second folded edge overlapping each other, thus reducing the possibility that the electrode assembly is in contact with the housing; by fixing the first folded edge and the second folded edge with the insulating sheet, the insulating sheet can be used for fixing the insulating film, and since the insulating sheet can be connected to a side of the exhaust structure distal to the electrode assembly, the insulating piece can be used for connecting the insulating film to the exhaust structure, thus improving the stability of the exhaust structure in the battery cell.

In some examples, the supporting block is provided independently from the plate body, and the second through hole penetrates through the supporting block and the plate body.

In this example, by allowing the second through hole to penetrate through the supporting block and the plate body, in one aspect, the supporting block and the plate body can be positioned through the second through hole to facilitate the connection of the supporting block to the plate body, and in another aspect, the supporting block, the plate body, and the insulating film are positioned through the second through hole to facilitate the connection of the three.

In some examples, the supporting block is provided independently from the plate body, and the plate body is connected to the insulating film.

In this example, by allowing the plate body to be connected to the insulating film, the exhaust structure and the insulating film can be connected and fixed to each other, and thereby the stability of the plate body can be improved.

In some examples, the supporting block is provided independently from the plate body, and the supporting block, the plate body, and the insulating film are connected to each other.

In this example, the supporting block is connected to the plate body, and the plate body is connected to the insulating film, such that the supporting block, the plate body, and the insulating film can form an integral structure, and thus the stability of the internal structure of the battery cell is improved and the possibility of the displacement of the internal structure of the battery cell is reduced.

In some examples, the center of the second through hole is disposed on one side of the center line of the plate body in the length direction.

In this example, the center of the second through hole does not coincide with the center line of the plate body in the length direction, such that the second through hole is eccentrically arranged relative to the center line of the plate body in the length direction, and thereby the positioning and identification are facilitated when the exhaust structure is installed, and the possibility of erroneous installation is reduced.

In some examples, the center of the second through hole is disposed on one side of the center line of the plate body in the width direction.

In this example, the center of the second through hole does not coincide with the center line of the plate body in the width direction, such that the second through hole is eccentrically arranged relative to the center line of the plate body in the width direction, and thereby the positioning and identification are facilitated when the exhaust structure is installed, and the possibility of erroneous installation is reduced.

In some examples, the exhaust structure includes a plurality of second through holes. The plurality of second through holes are disposed on both sides of the center line of the plate body in the length direction, and the plurality of second through holes are asymmetric with respect to the center line of the plate body in the length direction.

In this example, by disposing the second through holes on both sides of the center line of the plate body in the length direction and allowing the second through holes on both sides of the plate body in the length direction to be disposed asymmetrically with respect to the center line of the plate body in the length direction, the identification of the exhaust structure is facilitated through the second through holes when the exhaust structure is installed, and the possibility of erroneous installation is reduced.

In some examples, the exhaust structure includes a plurality of second through holes. The plurality of second through holes are disposed on both sides of the center line of the plate body in the width direction, and the plurality of second through holes are asymmetric with respect to the center line of the plate body in the width direction.

In this example, by disposing the second through holes on both sides of the center line of the plate body in the width direction and allowing the second through holes on both sides of the plate body in the length direction to be disposed asymmetrically with respect to the center line of the plate body in the width direction, the identification of the exhaust structure is facilitated through the second through holes when the exhaust structure is installed, and the possibility of erroneous installation is reduced.

In some examples, the exhaust structure includes a plurality of supporting blocks, and each supporting block is provided with a second through hole.

In this example, by disposing the second through holes on the plurality of supporting blocks, in one aspect, the supporting blocks can be uniformly formed, such that the forming equipment of the supporting blocks is simplified, and the forming cost of the supporting blocks is reduced, and in another aspect, the different supporting blocks being installed at wrong positions is reduced.

In some examples, the supporting block is provided integrally with the plate body.

In this example, by allowing the supporting block to be provided integrally with the plate body, the shaping of the plate body and the supporting block can be facilitated, and the processability of the exhaust structure is improved.

In some examples, the plate body includes a second surface opposite to the first surface in the thickness direction of the plate body, and a recess is formed on the second surface at a position corresponding to the supporting block.

In this example, the second surface is disposed facing away from the first wall, and the recess on the second surface can be used for allowing the airflow at a side where the second surface is located to flow, and thereby the flow space of airflow can be increased and the flowability of the airflow in the battery cell can be improved.

In some examples, the recess extends to an edge of the plate body.

In this example, allowing the recess to extend to the edge of the plate body can enable the airflow at the edge of the plate body to flow toward the recess.

In some examples, the supporting block includes a bottom wall and a side wall. The bottom wall abuts against the first wall, the side wall is provided with a first hollow-through hole, and the first hollow-through hole is in communication with the recess.

In this example, the first through hole can be used for forming a channel that penetrates through the side wall of supporting block, such that the airflow at the side where the second surface is located can flow to the side where the first surface is located along the first hollow-through hole, and thereby the airflows at both sides of the plate body can directly flow along the first hollow-through hole, and thus the flow performance of airflow in the battery cell can be improved.

In some examples, the first wall is provided with a pressure relief mechanism, and the first hollow-through hole is in communication with the recess and the pressure relief mechanism.

In this example, the pressure relief mechanism can be used for pressure relief of the battery cell. By allowing the first hollow-through hole to be in communication with the recess and the pressure relief mechanism, the guiding of the airflow at a side of the plate body where the second surface is located to the pressure relief mechanism is promoted and the pressure relief performance of the battery cell is improved.

In some examples, the supporting block includes an edge supporting block, and the edge supporting block is disposed at the edge of the plate body.

In this example, by using the edge supporting block structure, the edge of the plate body can be supported, which helps to improve the structural strength of the edge part of the plate body, thus reducing the deformation of the edge of the plate body.

In some examples, a recess is formed on the second surface at a position corresponding to the edge supporting block, and the recess extends at least to the edge of the plate body in the width direction.

In this example, by forming the recess at a position corresponding to the edge supporting block, a space for the flowing of airflow can be formed through the recess, such that the airflow space in the battery cell is increased, and the flowing performance of the airflow in the battery cell is improved.

In some examples, the edge supporting block is provided with a second hollow-through hole, and the second hollow-through hole penetrates through the edge supporting block along a direction intersecting with the thickness direction of the first wall.

In this example, the second hollow-through hole is in communication with the fluid channel, such that the airflow at the edge supporting block can be guided to the fluid channel, thus improving the flowability of airflow at the edge part of the plate body.

In some examples, the second hollow-through hole is disposed opposite to the pressure relief mechanism.

In this example, by allowing the second hollow-through hole to be disposed opposite to the pressure relief mechanism, the airflow can quickly reach the pressure relief mechanism after passing through the second hollow-through hole, such that the pressure relief mechanism can be actuated in time.

In some examples, the supporting block is provided independently from the plate body, and the supporting block is fixed to the plate body.

In this example, allowing the supporting block to be provided independently from the plate body can facilitate the independent shaping of the supporting block and the plate body, thus simplifying the forming equipment of the supporting block and the plate body; by fixing the supporting block to the plate body, the relative displacement between the supporting block and the plate body can be reduced to improve the structural stability of the exhaust structure.

In some examples, the edge of the supporting block is at a preset distance from the edge of the plate body.

In this example, the supporting block is at a preset distance from the edge of the plate body, such that the supporting block does not completely block the edges of the plate body in the length direction, and a space for the flowing of airflow can be formed at the outer peripheral surface of the supporting block, thereby improving the flow performance of airflow.

In some examples, in the width direction of the plate body, the edge of the supporting block is at a preset distance from the edge of the plate body.

In this example, by allowing the supporting block to be at a preset distance from the edge of the plate body, the supporting block does not completely block the edges of the plate body in the width direction, and a space for the flowing of airflow can be formed at the outer peripheral surface of the supporting block, thereby improving the flow performance of airflow.

In some examples, the supporting block is in hot-melting connection to the plate body.

In this example, by adopting the hot-melting connection mode, the supporting block and the plate body can be quickly connected, and the supporting block and the plate body are connected and fixed to each other through the weld mark formed by hot melting, which helps to increase the connection area between the supporting block and the plate body and improve the connection strength between the supporting block and the plate body.

In some examples, a plurality of supporting blocks are provided, and a plurality of weld marks are formed on each supporting block and the plate body.

In this example, by forming a plurality of weld marks, the connection parts between the supporting block and the plate body can be relatively dispersed, such that the problem that the local temperature of the plate body is too high due to a single weld mark is reduced, and thereby the problem of large-scale welding through and melting of the plate body is reduced.

In some examples, the weld marks of the supporting block resulting from hot melting are exposed on a surface of the plate body distal to the supporting block.

In this example, allowing the weld marks to be exposed on the surface of the plate body distal to the supporting block facilitates the mutual melting and welding of the plate body and the supporting block, such that the plate body is fixed on the plate body, and the welding contact surface between the supporting block and the plate body is increased, thus improving the structural strength of the plate body and the supporting block.

In some examples, the thickness of the plate body is smaller than the thickness of the supporting block.

In this example, by allowing the thickness of the plate body to be smaller than the thickness of the supporting block, in one aspect, the overall thickness of the exhaust structure is reduced, and in another aspect, the plate body with smaller thickness is subjected to hot melting, such that the required equipment power is relatively low and the cost is saved.

In some examples, the battery cell further includes a pressure relief mechanism. The pressure relief mechanism is disposed on the first wall, and the fluid channel is used for allowing the airflow in the inner cavity to flow toward the pressure relief mechanism.

In this example, the pressure relief mechanism is used for relieving the airflow inside the battery cell toward the outside of the battery cell. The fluid channel can enable the airflow in the battery cell to pass through the exhaust structure and reach the pressure relief mechanism, such that the pressure relief mechanism can relieve pressure in time, and the reliability of the battery cell is improved.

In some examples, the exhaust structure includes a plate body and a supporting block. The supporting block is disposed on a side of the plate body facing the first wall, a fluid channel is formed around the supporting block, and the projection of the supporting block on the first wall does not coincide with the pressure relief mechanism.

In this example, by allowing the supporting block to be disposed on the side of the plate body facing the first wall, the supporting block can act on the first wall, such that the plate body is used for supporting the electrode assembly and thereby the damage to the electrode assembly due to stress concentration can be reduced; in one aspect, by forming the fluid channel around the supporting block, the airflow can be allowed to flow toward the pressure relief mechanism along the fluid channel; in another aspect, by allowing the projection of the supporting block on the first wall to be not coincident with the pressure relief mechanism, the supporting block and the pressure relief mechanism are present in an at least partially staggered manner, and thus the possibility of the deformation of the pressure relief mechanism due to pressing by the supporting block is reduced.

In some examples, the plate body is provided with a reinforcing rib at a position corresponding to the pressure relief mechanism.

In this example, by disposing the reinforcing rib on the plate body, the structural strength of the part of the plate body corresponding to the pressure relief mechanism can be improved, and thus the possibility of deformation of the part of the plate body corresponding to the pressure relief mechanism is reduced.

In some examples, the reinforcing rib is disposed on a side of the plate body facing the first wall.

In this example, by allowing the reinforcing rib to correspond to the position of the pressure relief mechanism and allowing the reinforcing rib to be disposed facing the first wall, the reinforcing rib can serve as a barrier between the plate body and the pressure relief mechanism, thereby reducing the possibility that the plate body presses the pressure relief mechanism.

In some examples, the reinforcing rib extends to the edge of the plate body.

In this example, allowing the reinforcing ribs to extend to the edge of the plate body increases the length of the reinforcing rib and improves the strength of the exhaust structure.

In some examples, the reinforcing rib extends to an adjacent supporting block.

In this example, allowing the reinforcing rib to extend to an adjacent supporting block enables the cooperation between the reinforcing rib and the supporting block, such that the structural strength of the reinforcing rib is improved and thereby the overall structural strength of the exhaust structure is improved.

In some examples, the reinforcing rib extends to the edges of the plate body, and the reinforcing rib extends to the adjacent supporting block.

In this example, by allowing the reinforcing rib to extend to the edges of the plate body, the structural strength at the edge of the plate body is improved, and the reinforcing rib is also used to connect the adjacent supporting block, such that the strength of the reinforcing rib is improved, and thereby the deformation resistance of the plate body can be improved.

In some examples, in the thickness direction of the first wall, the height of the reinforcing rib is smaller than the height of the supporting block.

In this example, by allowing the height of the reinforcing rib to be smaller than the height of the supporting block, the reinforcing rib can improve the structural strength of the plate body, and the possibility that the reinforcing rib is in contact with the explosion-proof valve is reduced, thus reducing the damage to the explosion-proof valve caused by the reinforcing rib.

In some examples, the reinforcing rib is provided integrally with the plate body.

In this example, allowing the reinforcing ribs to be provided integrally with the plate body facilitates the shaping of the reinforcing rib and improves the structural strength of the reinforcing rib and the plate body.

In some examples, the reinforcing rib is provided independently from the plate body and connected to each other.

In this example, by allowing the reinforcing rib and the plate body to be connected and fixed to each other, the possibility that the reinforcing rib falls off is reduced, and the stability of the reinforcing rib is improved.

In some examples, the exhaust structure includes a plate body. The plate body includes a first surface disposed along the thickness direction of the plate body, and the fluid channel is a groove disposed on the first surface.

In this example, allowing the fluid channel to be a groove formed on the first surface facilitates the shaping of the fluid channel.

In some examples, the exhaust structure includes a plurality of sub-exhaust structures spaced apart from each other, and a fluid channel is formed between adjacent sub-exhaust structures.

In this example, the plurality of sub-exhaust structures are combined to form the exhaust structure that has a fluid channel, such that the arrangement and installation mode of the sub-exhaust structures can be determined according to the interior spacial arrangement of the battery cell after the plurality of sub-exhaust structures are separately shaped, and the arrangement of the exhaust structure can be facilitated while improving the flow performance of airflow inside the battery cell.

In some examples, the battery cell further includes an insulating film. The insulating film is wrapped outside the electrode assembly, and the insulating film is connected to the sub-exhaust structures.

In this example, by providing the insulating film, the insulating film can serve as a barrier between the electrode assembly and the housing to reduce the contact of the electrode assembly with the housing; by connecting the insulating film to the sub-exhaust structures, the sub-exhaust structure and the insulating film can be fixed to each other through the insulating film, and thus the structural stability of the exhaust structure is improved.

In some examples, the housing includes a second wall, the second wall includes a second sub-wall, and the second sub-wall is provided with an electrode terminal.

In this example, by providing the electrode terminal, the charging and discharging of the battery cell can be facilitated; by disposing the electrode terminal on the second sub-wall, the electrode terminal and the first wall can be present in a staggered manner, and thus the mutual interference between the electrode terminal and the pressure relief mechanism on the first wall is reduced.

In some examples, the second sub-wall is opposite to the first wall.

In this example, by allowing the second sub-wall to be opposite to the first wall, the electrode terminal and the pressure relief mechanism can be respectively located on two opposite wall surfaces of the housing, thereby reducing the possibility of interference between the electrode terminal and the explosion-proof valve.

In some examples, the second sub-wall is connected to the first wall.

In this example, by allowing the second sub-wall to be connected to the first wall, the second sub-wall and the first wall can be present in a staggered manner, and the electrode terminal and the explosion-proof valve face different directions of the battery cell, thus reducing the possibility of interference between the electrode terminal and the explosion-proof valve.

In some examples, the electrode assembly includes a tab, and the tab faces the second sub-wall.

In this example, the tab is used for being electrically connected to the electrode terminal, and the electrical connection of the tab with the electrode terminal can be facilitated by allowing the tab to be disposed facing the second sub-wall.

In some examples, the second sub-wall is an end cover.

In this example, allowing the second sub-wall to serve as the end cover can facilitate the installation of the electrode terminal.

In some examples, the exhaust structure includes a plate body and a supporting block. The plate body includes a first surface disposed along the thickness direction of the plate body, the supporting block is disposed on the first surface, a fluid channel is formed around the supporting block, and the size of the supporting block satisfies at least one of the following conditions:
the supporting block has a shape of a long strip, the length of the plate body is L0, the length of the supporting block is L1, and the length L1 of the supporting block is not smaller than 0.25L0;
along the thickness direction of the plate body, the thickness H0 of the supporting block is not smaller than 0.1 mm and not greater than 5 mm; and
the supporting block has a shape of a long strip, the width of the plate body is A0, and the total width of the supporting block is not smaller than 0.2A0 and not greater than 0.8A0.

In this example, when the supporting block and the plate body satisfy the condition that the length L1 of the supporting block is not smaller than 0.25L0, the length of the supporting block matches the length of the plate body, such that the supporting block can support the plate body, and meanwhile, the airflow channel formed around the supporting block will not be too small, and thereby the exhaust structure can have relatively good structural strength and relatively good exhaust performance as well.

In this example, when the supporting block satisfies the condition that the thickness of the supporting block is not smaller than 0.1 mm and not greater than 5 mm, the supporting block has relatively good structural strength, and meanwhile, the space occupied by the supporting block is relatively appropriate, and the influence on the energy density of the battery cell is relatively small.

In this example, when the supporting block and the plate body satisfy the condition that the width A2 of the supporting blocks is not smaller than 0.2A0 and not greater than 0.8A0, in one aspect, in the width direction of the plate body, a fluid channel can be formed at the outer periphery of the supporting block, such that the exhaust structure has a relatively good exhaust performance, and in another aspect, the supporting block can better support the plate body, which can help to improve the structural strength of the exhaust structure.

The present application further provides an example of a battery. The battery includes the battery cell in any one of the above examples.

In this example, the battery pack includes the battery cell in the above examples, and by improving the flow performance of airflow in the battery cell using the exhaust structure in the battery cell, the reliability of the battery cell can be improved.

The present application further provides an example of an electric device. The electric device includes the battery cell described in any one of the above examples or the battery described in any one of the above examples.

### BRIEF DESCRIPTION OF THE DRAWINGS

To more clearly illustrate the technical solutions in the embodiments of the present application or in the prior art, the drawings required for illustrating the embodiments or description of the prior art are briefly described below. Apparently, the drawings in the following description illustrate merely some embodiments of the present application, and those of ordinary skills in the art may still derive other drawings from the structured illustrated in these drawings without creative efforts.
FIG. 1 is a schematic structural diagram of an electric device according to an example of the present application;
FIG. 2 is a schematic structural diagram of a battery according to an example of the present application;
FIG. 3 is a schematic structural diagram of a battery cell according to an example of the present application;
FIG. 4 is a partial cross-sectional view of the installation state of an exhaust structure in a battery cell according to an example of the present application;
FIG. 5 is a partial enlarged view of the portion 4A in FIG. 4;
FIG. 6 is a schematic structural diagram of a battery cell according to another example of the present application;
FIG. 7 is a schematic structural diagram of an exhaust structure in which a second surface is provided with a supporting block according to an example of the present application;
FIG. 8 is a schematic structural diagram of an exhaust structure in which a first surface is provided with a supporting block according to an example of the present application;
FIG. 9 is a schematic structural diagram of an exhaust structure in which both the second surface and the first surface are provided with a supporting block according to an example of the present application;
FIG. 10 is a schematic structural diagram of an exhaust structure in which a first surface is provided with a supporting block according to another example of the present application;
FIG. 11 is a schematic diagram showing a structure in which the supporting blocks are distributed along the length direction of the bottom supporting plate according to an example of the present application;
FIG. 12 is a schematic diagram showing a structure in which the supporting blocks are distributed along the width direction of the bottom supporting plate according to another example of the present application;
FIG. 13 is a schematic diagram showing a structure in which the supporting blocks are distributed along the length direction of the bottom supporting plate according to yet another example of the present application;
FIG. 14 is a schematic exploded view of a battery cell according to still another example of the present application;
FIG. 15 is a top view of FIG. 14;
FIG. 16 is a cross-sectional view taken along line 15A-15A of FIG. 15;
FIG. 17 is a partial enlarged view of the portion 16A in FIG. 16;
FIG. 18 is a schematic structural diagram showing an example of the exhaust structure of FIG. 14;
FIG. 19 is a top view of FIG. 18;
FIG. 20 is a cross-sectional view taken along line 19A-19A of FIG. 19;
FIG. 21 is a partial enlarged view of the portion 20A in FIG. 20;
FIG. 22 is a schematic structural diagram of an exhaust structure in which a second through hole is disposed on a supporting block according to an example of the present application;
FIG. 23 is a partial enlarged view of the portion 22A in FIG. 22;
FIG. 24 is a schematic structural diagram of an exhaust structure in which a second through hole is disposed on a supporting block according to another example of the present application;
FIG. 25 is a schematic exploded view showing the fitting between an insulating film, an insulating sheet, and an exhaust structure according to an example of the present application;
FIG. 26 is a schematic structural diagram showing the fitting between an insulating film and an exhaust structure according to an example of the present application;
FIG. 27 is a top view of FIG. 26;
FIG. 28 is a bottom view of FIG. 26;
FIG. 29 is a bottom view showing the fitting between an insulating film and an exhaust structure according to another example of the present application;
FIG. 30 is a schematic structural diagram showing the positional relationship between a supporting block and a plate body according to an example of the present application;
FIG. 31 is a schematic structural diagram showing a state in which a supporting block, a plate body, and an insulating film are in hot-melting connection according to an example of the present application;
FIG. 32 is a schematic structural diagram of a reinforcing rib according to an example of the present application;
FIG. 33 is a schematic structural diagram of a reinforcing rib according to another example of the present application;
FIG. 34 is a schematic diagram showing the positional relationship between a reinforcing rib and a supporting block in a state where the exhaust structure is installed according to an example of the present application;
FIG. 35 is a schematic structural diagram of an exhaust structure in a state where the grooves form a fluid channel according to an example of the present application;
FIG. 36 is a schematic structural diagram of an exhaust structure in a state where the sub-exhaust structures are combined according to an example of the present application.

The realization of the object, the functional features, and the advantages of the present application will be further described with reference to the drawings.

### DETAILED DESCRIPTION

The technical solutions in the embodiments of the present application will be clearly and completely described hereinafter with reference to the drawings in the embodiments of the present application. It is apparent that the described embodiments are only some, but not all, embodiments of the present application. Based on the embodiments in the present application, all other embodiments obtained by those of ordinary skill in the art without creative work shall fall within the protection scope of the present application.

It should be noted that, if directional indications (such as up, down, left, right, front, back, ...) are involved in the embodiments of the present application, the directional indications are only used for explaining the relative position relationship between the components, the motion situation, and the like under a certain posture (as shown in the drawing), and if the certain posture is changed, the directional indications are changed accordingly.

In addition, if there is a description relating to "first", "second", etc., in the embodiments of the present application, the description of "first", "second", etc., is for descriptive purposes only and is not to be construed as indicating or implying relative importance or to implicitly indicate the number of technical features indicated. Thus, a feature defined by "first" or "second" may explicitly or implicitly show that at least one such feature is included. In addition, technical solutions between the embodiments may be combined with each other, but the combining must be based on the premise that it can be realized by those of ordinary skill in the art. When a combination of technical solutions results in contradiction or cannot be realized, such a combination of technical solutions should not be considered to exist and shall not fall within the protection scope of the present application.

The plurality described in the present application means at least two (including two).

In the embodiments of the present application, the battery cell may be a secondary battery. The secondary battery refers to a battery cell that can be reused by activating the active material through charging after the battery cell is discharged.

The battery cell may be a lithium-ion battery, a sodium ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like. This is not limited in the embodiments of the present application.

The battery cell generally includes an electrode assembly. The electrode assembly includes a positive electrode, a negative electrode, and a separator. During the charging and discharging process of the battery cell, active ions (such as lithium ions) are intercalated and deintercalated back and forth between the positive electrode and the negative electrode. The separator is disposed between the positive electrode and the negative electrode to prevent the positive and negative electrodes from short-circuiting while allowing the passage of active ions.

In some embodiments, the positive electrode may be a positive electrode plate, and the positive electrode plate may include a positive electrode current collector and a positive electrode active material disposed on at least one surface of the positive electrode current collector.

As an example, the positive electrode current collector has two surfaces opposite to each other in a thickness direction thereof, and the positive electrode active material is disposed on either or both of the two opposite surfaces of the positive electrode current collector.

As an example, the positive electrode current collector may be a metal foil or a composite current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material substrate and a metal layer. The composite current collector may be fabricated by forming a metal material (aluminum, aluminum alloy, nickel, nickel alloy, titanium, titanium alloy, silver, silver alloy, etc.) on a polymer material substrate (such as a substrate made of polypropylene, polyethylene terephthalate, polybutylene terephthalate, polystyrene, polyethylene, etc.).

As an example, the positive electrode active material may include at least one of the following materials: a lithium-containing phosphate, a lithium transition metal oxide, and respective modified compounds thereof. However, the present application is not limited to these materials, and other traditional materials that can be used as positive electrode active materials for batteries may also be used. These positive electrode active materials may be used alone or in combination of two or more. Examples of the lithium-containing phosphate may include, but are not limited to, at least one of lithium iron phosphate (such as LiFePO4 (also referred to as LFP)), a composite material of lithium iron phosphate and carbon, lithium manganese phosphate (such as LiMnPO4), a composite material of lithium manganese phosphate and carbon, lithium manganese iron phosphate, and a composite material of lithium manganese iron phosphate and carbon.

In some embodiments, the positive electrode may be a foam metal. The foam metal may be foam nickel, foam copper, foam aluminum, foam alloy, foam carbon, or the like. When the foam metal is used as the positive electrode, the surface of the foam metal may not be provided with the positive electrode active material. Certainly, the positive electrode active material may also be provided. As an example, the foam metal may also be filled or/and deposited with a lithium source material, a potassium metal, or a sodium metal; the lithium source material is a lithium metal and/or a lithium-rich material.

In some embodiments, the negative electrode may be a negative electrode plate, and the negative electrode plate may include a negative electrode current collector.

As an example, the negative electrode current collector may be a metal foil, a foam metal, or a composite current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material substrate and a metal layer. The foam metal may be foam nickel, foam copper, foam aluminum, foam alloy, foam carbon, or the like. The composite current collector may be fabricated by forming a metal material (copper, copper alloy, nickel, nickel alloy, titanium, titanium alloy, silver, silver alloy, etc.) on a polymer material substrate (such as a substrate made of polypropylene, polyethylene terephthalate, polybutylene terephthalate, polystyrene, polyethylene, etc.). As an example, the negative electrode current collector may be a metal foil or a composite current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material substrate and a metal layer. The composite current collector may be fabricated by forming a metal material (copper, copper alloy, nickel, nickel alloy, titanium, titanium alloy, silver, silver alloy, etc.) on a polymer material substrate (such as a substrate made of polypropylene, polyethylene terephthalate, polybutylene terephthalate, polystyrene, polyethylene, etc.).

As an example, the negative electrode plate may include a negative electrode current collector and a negative electrode active material disposed on at least one surface of the negative electrode current collector.

As an example, the negative electrode current collector has two surfaces opposite to each other in a thickness direction thereof, and the negative electrode active material is disposed on either or both of the two opposite surfaces of the negative electrode current collector.

As an example, the negative electrode active material may be a negative electrode active material known in the art for use in battery cells. As an example, the negative electrode active material may include at least one of the following materials: artificial graphite, natural graphite, soft carbon, hard carbon, a silicon-based material, a tin-based material, lithium titanate, and the like.

In some embodiments, the negative electrode may be a foam metal. The foam metal may be foam nickel, foam copper, foam aluminum, foam alloy, foam carbon, or the like. When the foam metal is used as the negative electrode plate, the surface of the foam metal may not be provided with the negative electrode active material. Certainly, the negative electrode active material may also be provided.

As an example, the negative electrode current collector may also be filled or/and deposited with a lithium source material, a potassium metal, or a sodium metal; the lithium source material is a lithium metal and/or a lithium-rich material.

In some embodiments, the material of the positive electrode current collector may be aluminum, and the material of the negative electrode current collector may be copper.

In some embodiments, the electrode assembly further includes a separator disposed between the positive electrode and the negative electrode.

In some embodiments, the separator is a separation film. The present application does not particularly limit the type of the separation film, and any porous-structure separation film known to have good chemical stability and mechanical stability may be selected and used.

As an example, the main material of the separation film may be selected from at least one of glass fiber, non-woven fabric, polyethylene, polypropylene, polyvinylidene fluoride, and ceramic.

In some embodiments, the separator is a solid-state electrolyte. The solid-state electrolyte is disposed between the positive electrode and the negative electrode, serving both to transport ions and to isolate the positive electrode and the negative electrode.

In some embodiments, the battery cell further includes an electrolyte that serves to conduct ions between the positive electrode and the negative electrode. The present application does not particularly limit the type of the electrolyte, which can be selected as needed. The electrolyte may be liquid, gel, or solid.

In some embodiments, the electrode assembly is of a wound structure. The positive electrode plate and the negative electrode plate are wound to form a wound structure.

In some embodiments, the electrode assembly is of a stacked structure.

As an example, there may be a plurality of positive electrode plates and a plurality of negative electrode plates, and the plurality of positive electrode plates and the plurality of negative electrode plates are alternately stacked.

As an example, a plurality of positive electrode plates may be disposed, and the negative electrode plate is folded to form a plurality of stacked folded segments, with one positive electrode plate disposed between adjacent folded segments.

As an example, the positive electrode plate and the negative electrode plate are both folded to form a plurality of stacked folded segments.

As an example, there may be a plurality of separators, and each separator is disposed between any adjacent positive electrode plates or negative electrode plates separately.

As an example, the separators may be arranged continuously between any adjacent positive electrode plates or negative electrode plates by means of folding or winding.

In some embodiments, the shape of the electrode assembly may be cylindrical, flat, multi-prismatic, or the like.

In some embodiments, the electrode assembly is provided with tabs that can conduct current out from the electrode assembly. The tabs include a positive tab and a negative tab.

In some embodiments, the battery cell may include a housing. The housing is used for encapsulating electrode assemblies, electrolytes, and other components. The housing may be a steel housing, an aluminum housing, a plastic housing (such as polypropylene), a composite metal housing (such as a copper-aluminum composite housing), an aluminum-plastic film, or the like.

As an example, the battery cell may be a cylindrical battery cell, a prismatic battery cell, a soft-pack battery cell, or a battery cell of other shapes. The prismatic battery cell includes a square-housing battery cell, a blade-shaped battery cell, and a multi-prismatic battery, and the multi-prismatic battery is, e.g., a hexagonal prismatic battery. This is not particularly limited in the present application.

In some embodiments, the housing includes an end cover and a housing body. The housing body is provided with an opening, and the end cover closes the opening to form a confined space for accommodating the electrode assembly, the electrolyte, and other substances. The housing body may be provided with one or more openings. There may also be one or more end covers.

In some embodiments, at least one electrode terminal is disposed on the housing, and the electrode terminal is electrically connected to the tabs. The electrode terminal may be directly connected to the tabs or may be indirectly connected to the tabs through a current collecting member. The electrode terminal may be disposed on the end cover, and it may also be disposed on the housing body.

In some embodiments, the housing is provided thereon with a pressure relief mechanism. The pressure relief mechanism is used for relieving the internal pressure of the battery cell.

As an example, when the internal pressure or temperature of the battery cell reaches a preset threshold, the pressure relief mechanism is actuated to relieve the internal pressure or temperature. When the internal pressure or temperature of the battery cell reaches a preset threshold, the pressure relief mechanism performs an action or a weak structure provided in the pressure relief mechanism is broken, thereby forming an opening or a channel through which the internal pressure or temperature can be relieved. The designed thresholds vary depending on different design requirements. The threshold may depend on the material of one or more of the positive electrode plate, the negative electrode plate, the electrolyte, and the separator in the battery cell.

As an example, the pressure relief mechanism may be integrally formed with the housing.

As an example, the pressure relief mechanism may be provided independently from the housing and connected thereto.

The term "actuate" as used herein means that the pressure relief mechanism generates an action or is activated to a certain state, such that the internal pressure and temperature of the battery cell are relieved. The actions generated by the pressure relief mechanism may include, but are not limited to: components in the pressure relief mechanism moving to form an exhaust channel, at least a part of the pressure relief mechanism rupturing, fracturing, being torn or opened, and the like. When the pressure relief mechanism is actuated, high-temperature and high-pressure substances inside the battery cell are discharged outwards from the actuated part as emissions. In this way, the battery cell can be subjected to pressure relief and temperature relief under the condition of controllable pressure or temperature, such that the potential more serious accident is avoided.

Emissions from the battery cells referred to in the present application include, but are not limited to: electrolyte, dissolved or split positive and negative electrode plates, fragments of a separator, high-temperature and high-pressure gas generated by reaction, flame, and the like.

The battery described in the embodiments of the present application may include one or more battery cells to provide a single physical module with higher voltage and capacity. When there are a plurality of battery cells, the plurality of battery cells are connected in series, in parallel, or in series-parallel by a busbar component.

In some embodiments, the battery may be a battery module, and when there are a plurality of battery cells, the plurality of battery cells are arranged and fixed to form one battery module.

In some embodiments, the battery may be a battery pack. The battery pack includes a case and a battery cell, and the battery cell or the battery module is accommodated in the case.

In some embodiments, the case may be a part of the chassis structure of the vehicle. For example, a part of the case may become at least a part of the floor of the vehicle, or a part of the case may become at least a part of the crossmember and the longitudinal member of the vehicle.

In some embodiments, the battery may be an energy storage device. The energy storage device includes an energy storage container, an energy storage electric cabinet, and the like.

In recent years, new energy vehicles have developed by leaps and bounds. In the field of electric vehicles, power batteries, as the power source of electric vehicles, play an irreplaceable and important role. The battery consists of a case and a plurality of battery cells accommodated in the case. Batteries, as core components of new energy vehicles, have relatively high requirements both in terms of safety and service life.

In the related designs, in order to improve the reliability of the battery cell, a pressure relief mechanism is usually disposed on the housing of the battery cell. Meanwhile, in order to protect the electrode assembly or to insulate the electrode assembly from the housing, an insulating plate is usually disposed between the electrode assembly and the housing, but the insulating plate will block the flow of gas inside the battery cell. In the case of the thermal runaway of a battery cell, the insulating plate may block the space between the electrode assembly and the housing, such that gas flow is not smooth, the pressure relief mechanism is not actuated in time, and thus the reliability of the battery cell is reduced. This problem is particularly prominent when the insulating plate is provided in a manner of covering the pressure relief mechanism.

In view of the above problem, an example of the present application provides a battery cell. The battery cell includes a housing, an electrode assembly, and an exhaust structure. The housing has an inner cavity, and the electrode assembly and the exhaust structure are both disposed in the inner cavity; the housing has a first wall, and the exhaust structure is disposed between the electrode assembly and the first wall. The exhaust structure is provided with a fluid channel, and the fluid channel can be used for forming, in the inner cavity, a passage for the flowing of airflow, such that the airflow can flow between the first wall and the electrode assembly. This reduces the blocking of the airflow by the electrode assembly or the first wall, and thus the airflow can flow toward a preset position along the fluid channel and then the flow performance of airflow inside the battery cell is promoted, such that the pressure relief of the battery cell subjected to thermal runaway can be performed in time, and the reliability of the battery cell is improved.

The battery cell in the examples of the present application can be used in a battery. The battery may include a case, and the battery cell is disposed in the case. One or more battery cells may be installed in the case. When a plurality of battery cells are installed in the case, the plurality of battery cells may be connected to each other in series, in parallel, or in series-parallel. In this example, the battery uses the battery cells described above; the reliability of the battery cells can be improved by improving the flow performance of airflow inside the battery cells, and thus the reliability of the battery composed of the battery cells can be correspondingly improved.

The battery in the examples of the present application can be used in an electric device, and the electric device includes, but is not limited to, a mobile phone, a portable device, a laptop, an electric bicycle, an electric vehicle, a ship, a spacecraft, an electric toy, an electric tool, and the like. For example, the spacecraft includes an airplane, a rocket, a space shuttle, a spaceship, and the like. The electric toy includes a stationary or mobile electric toy, such as a game console, an electric vehicle toy, an electric ship toy, or an electric airplane toy. The electric tool includes a metal cutting electric tool, a grinding electric tool, an assembly electric tool, and a railway electric tool, such as an electric drill, an electric grinder, an electric wrench, an electric screwdriver, an electric hammer, an impact drill, a concrete vibrator, or an electric planer. The electric device includes, but is not limited to, a mobile phone, a portable device, a laptop, an electric bicycle, an electric vehicle, a ship, a spacecraft, an electric toy, an electric tool, and the like. For example, the spacecraft includes an airplane, a rocket, a space shuttle, a spaceship, and the like. The electric toy includes a stationary or mobile electric toy, such as a game console, an electric vehicle toy, an electric ship toy, and an electric airplane toy. The electric tool includes a metal cutting electric tool, a grinding electric tool, an assembly electric tool, and a railway electric tool, such as an electric drill, an electric grinder, an electric wrench, an electric screwdriver, an electric hammer, an impact drill, a concrete vibrator, or an electric planer.

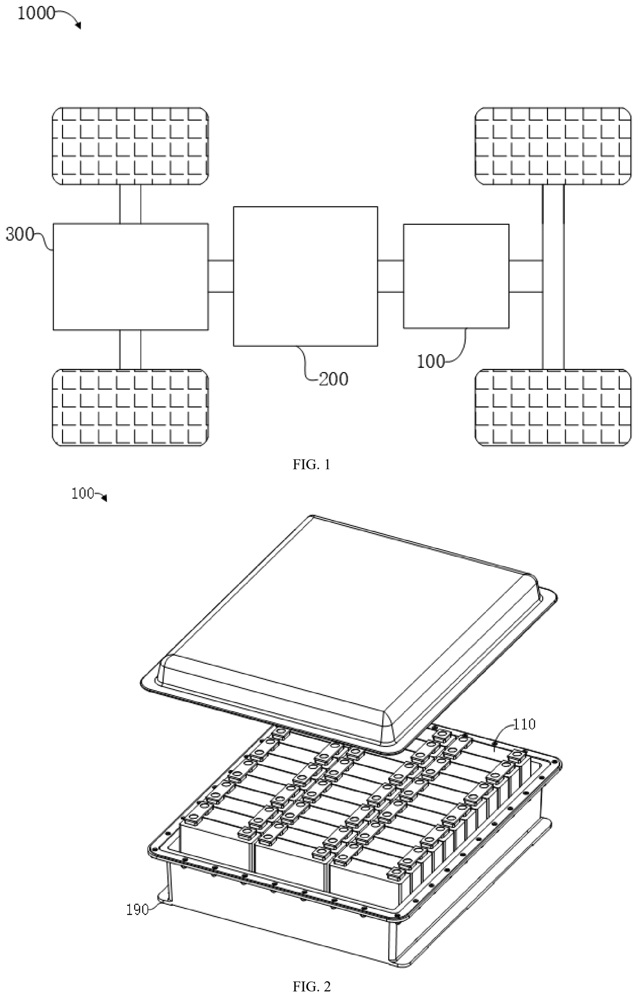

Referring to FIG. 1 and FIG. 2, for convenience of description, in this example, taking the case where an electric device 1000 is a vehicle as an example, the vehicle may be a fuel vehicle, a gas vehicle, or a new energy vehicle. The new energy vehicle may be a pure electric vehicle, a hybrid vehicle, or an extended-range vehicle. A driving mechanism 300, a control mechanism 200, and a battery 100 may be disposed inside the vehicle. The driving mechanism 300 may be a motor or the like, and the control mechanism 200 is used for controlling the battery 100 to supply power to the driving mechanism 300. For example, the battery 100 may be disposed at the bottom, front, or rear part of the vehicle. The battery 100 may be used for supplying power to other devices of the vehicle. For example, the battery 100 may serve as the operation power source for the vehicle and is used for the circuit system of the vehicle, for example, for operation power needed for starting, navigating, and driving of the vehicle. In another example of the present application, the battery 100 may not only serve as the operation power source for the vehicle, but also serve as a driving power source for the vehicle to, instead of or in part instead of fuel or natural gas, provide driving power for the vehicle. In this example, the vehicle uses the battery 100 described above, and by improving the reliability of the battery 100, the reliability of the electric device 1000 can be improved.

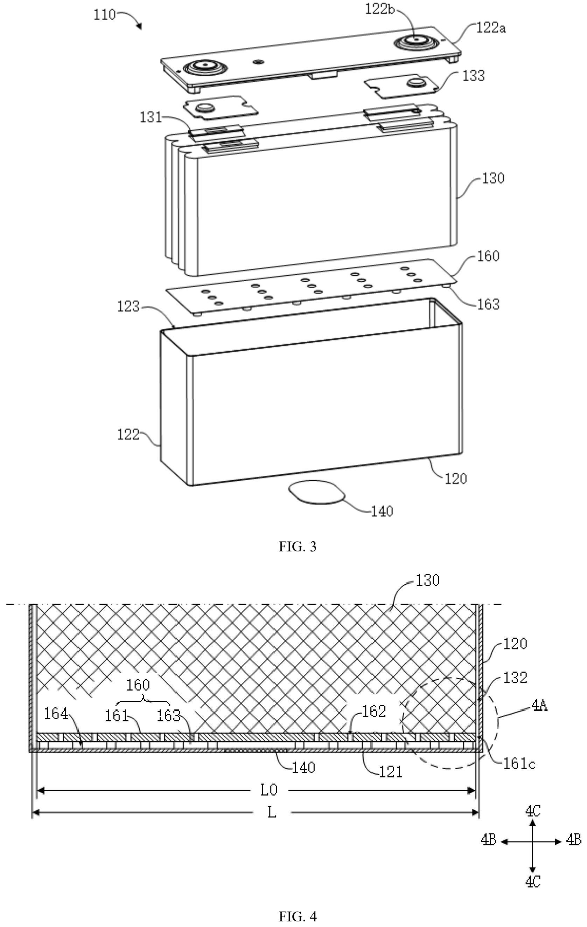

Referring to FIG. 3 to FIG. 5, in some examples of the present application, a battery cell 110 is disclosed. The battery cell includes a housing 120, an electrode assembly 130, and an exhaust structure 160. The housing 120 has an inner cavity, and the housing 120 has a first wall 121; the electrode assembly 130 is disposed in the inner cavity; the exhaust structure 160 is disposed between the first wall 121 and the electrode assembly 130, and the exhaust structure 160 is provided with a fluid channel 164.

The housing 120 forms the outer shell structure of the battery cell 110, the housing 120 is at least partially hollow to form the inner cavity, the housing 120 is provided with an opening 123, and the opening 123 is in communication with the inner cavity. The housing 120 has a first wall 121, the first wall 121 is one of the wall surfaces of the housing 120, and the first wall 121 may be at least one of a bottom wall, a top wall, or a side wall of the housing 120. The housing 120 may be an aluminum housing or other material.

The electrode assembly 130 is installed in the inner cavity. The electrode assembly 130 may be of a winding structure or a stacked structure. The electrode assembly 130 may be placed in the inner cavity of the housing 120 through the opening 123 on the housing 120.

The exhaust structure 160 is installed in the inner cavity and located between the electrode assembly 130 and the first wall 121, and the exhaust structure 160 serves to create a barrier between the first wall 121 and the electrode assembly 130, such that the electrode assembly 130 cannot be in contact with the first wall 121. The fluid channel 164 is an airflow channel disposed on the exhaust structure 160 for the flowing of airflow within the inner cavity. Since the exhaust structure 160 is disposed between the electrode assembly 130 and the first wall 121, the fluid channel 164 on the exhaust structure 160 may be used for the flowing of airflow between the first wall 121 and the electrode assembly 130.

The exhaust structure 160 may be made of an insulating material, such as plastic and polypropylene.

In this example, the exhaust structure 160 can be used as a barrier between the electrode assembly 130 and the first wall 121 of the housing 120, such that the possibility of the short-circuiting of the electrode assembly 130 can be reduced, thereby helping to improve the reliability of the battery cell 110. Due to the blocking by the exhaust structure 160, even if the housing 120 is deformed to a certain extent, the exhaust structure 160 still can isolate the first wall 121 from the electrode assembly 130, thereby reducing the problems of short-circuiting and the like caused by the contact between the electrode assembly 130 and the first wall 121.

In this example, the fluid channel 164 on the exhaust structure 160 is used for forming a channel for the flowing of airflow. Since the exhaust structure 160 is disposed between the first wall 121 and the electrode assembly 130, the fluid channel 164 may be used for the flowing of airflow between the first wall 121 and the electrode assembly 130, thereby improving the flow performance of airflow between the first wall 121 and the electrode assembly 130.

In this example, the fluid channel 164 may allow the airflow to flow toward a preset position. For example, the first wall 121 may be used for the installation of the pressure relief mechanism 140. In one aspect, the first wall 121 and the electrode assembly 130 may be isolated from each other by the exhaust structure 160 to reduce the possibility of the electrode assembly 130 blocking the pressure relief mechanism 140; in another aspect, due to the arrangement of the fluid channel 164 on the exhaust structure 160, a channel for the flowing of airflow to the pressure relief mechanism can be formed, such that the airflow can flow toward the pressure relief mechanism 140 more easily, thereby improving the usability of the pressure relief mechanism 140.

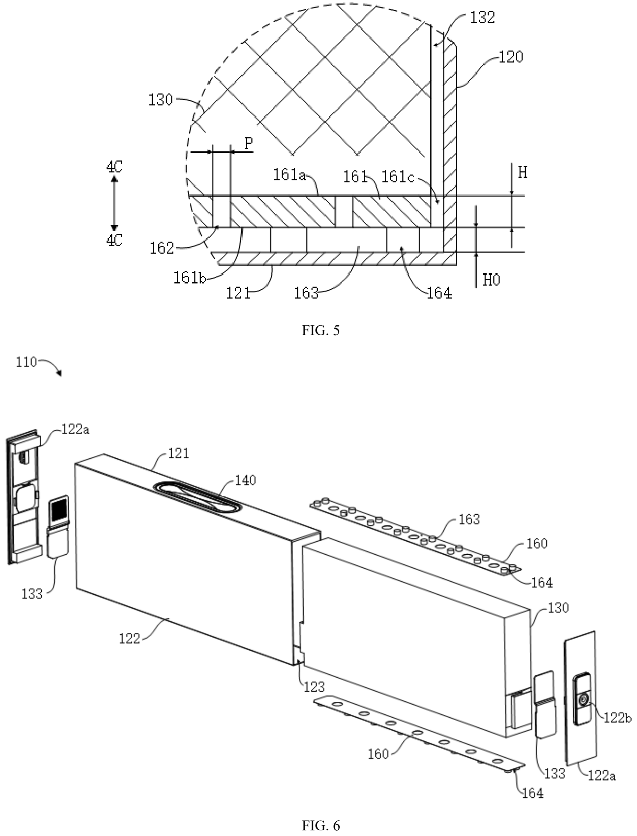

Referring to FIG. 6, in this example, the first wall 121 may be any wall surface of the housing 120, or may be multiple wall surfaces of the housing 120. When the first wall 121 is multiple wall surfaces of the housing 120, an exhaust structure 160 may be disposed between each of the first walls 121 and the electrode assembly 130.

Referring to FIG. 6, the housing 120 includes two first walls 121, and one exhaust structure 160 is disposed correspondingly for each first wall.

In one aspect, since the exhaust structure 160 can serve as a barrier between the electrode assembly 130 and the first wall 121, the possibility of the electrode assembly 130 being in contact with the housing 120 can be reduced, thereby improving the reliability of the battery cell 110; in another aspect, the fluid channel 164 on the exhaust structure 160 can improve the flow performance of airflow at different positions inside the battery cell 110, such that the airflow at different positions inside the battery cell 110 can flow toward the preset position along the fluid channel 164, and thereby the airflow can be subjected to pressure relief control through the pressure relief mechanism 140, thus improving the pressure relief performance of the pressure relief mechanism 140 when the battery cell 110 is at risk of thermal runaway.

In this example, the fluid channel 164 is used for the flowing of airflow. In some examples, the fluid channel 164 is a channel for the flowing of airflow disposed on the surface of the exhaust structure 160; in some examples, the fluid channel 164 is a channel extending through the interior of the exhaust structure 160, with an end part of the channel being in communication with the surface of the exhaust structure 160; in some examples, part of the fluid channel 164 extends through the interior of the exhaust structure 160 and part of the fluid channel is disposed on the surface of the exhaust structure 160.

In this example, there may be one fluid channel 164, or there may also be a plurality of fluid channels 164. When the exhaust structure 160 has a plurality of fluid channels 164, the plurality of fluid channels 164 may be provided independently from each other, and the plurality of fluid channels 164 may also be in communication with each other.

In some examples, the length of the exhaust structure 160 is not greater than the length of the first wall 121, and the width of the exhaust structure 160 is not greater than the width of the first wall 121, such that the exhaust structure 160 serves as a barrier between the first wall 121 and the electrode assembly 130.

In the examples of the present application, by disposing the exhaust structure in the inner cavity, installing the exhaust structure 160 between the electrode assembly 130 and the first wall 121 of the housing, and using the fluid channel 164 on the exhaust structure 160 as a passage for the flowing of airflow, the blocking of the airflow by the exhaust structure 160 disposed between the first wall 121 and the electrode assembly can be reduced, such that the airflow can flow toward a preset position through the fluid channel 164, thus improving the reliability of the battery cell.

In some examples, the fluid channel 164 is in communication with the edge of the exhaust structure 160 in a first direction 4B, and the first direction intersects with the thickness direction of the first wall 121.

Referring to FIG. 4 and FIG. 5, in this example, the thickness direction of the first wall 121 may be the 4C direction as shown in FIG. 4. In this example, the first direction 4B intersecting with the thickness direction of the first wall 121 means that the first direction 4B is not parallel to the thickness direction of the first wall 121. Optionally, the first direction 4B may be perpendicular to the thickness direction of the first wall 121.

The edge of the exhaust structure 160 in the first direction 4B may be any edge of the exhaust structure 160 in the first direction 4B. In some examples, the exhaust structure 160 is a rectangular plate, the exhaust structure 160 has a length direction and a width direction, and the edge of the exhaust structure 160 in the first direction 4B may be at least one edge of the exhaust structure 160 in the length direction or the width direction.

Referring to FIG. 6, the fluid channel 164 being in communication with the edge of the exhaust structure 160 in the first direction 4B means that: the fluid channel 164 has at least two openings, at least one opening of the fluid channel 164 is in communication with the edge of the exhaust structure 160 in the first direction 4B, and at least one opening of the fluid channel 164 and the edge of the exhaust structure 160 in the first direction 4B are present in a staggered manner.

In this example, by allowing the fluid channel 164 to be in communication with the edge of the exhaust structure 160 in the first direction 4B, the airflow at the outer side of the edge of the exhaust structure 160 in the first direction 4B can be allowed to flow along the fluid channel 164, such that the airflow at the outer side of the edge of the exhaust structure 160 in the first direction 4B can flow toward a preset position along the fluid channel 164. Since the airflow at the edge of the exhaust structure 160 in the first direction 4B can be guided to a preset position along the fluid channel 164 in this example, the problem of local temperature rise caused by the blocking of the airflow at the edge of the exhaust structure 160 in the first direction 4B can be reduced.

In some examples, the first direction 4B intersects with the thickness direction of the first wall 121, and the airflow at the outer side of the edge of the exhaust structure 160 in the first direction 4B can enter the fluid channel 164 to flow toward the preset position by allowing the fluid channel 164 to be in communication with the edge of the exhaust structure 160 in the first direction 4B.

Referring to FIG. 4 and FIG. 5, in some examples, the housing 120 includes a second wall 122. A first gap 132 is formed between the outer peripheral surface of the electrode assembly 130 and the second wall 122, and the fluid channel 164 is in communication with the first gap 132.

In this example, the second wall 122 may be any wall surface of the housing 120 other than the first wall 121. Taking the case where the first wall 121 is the bottom wall of the housing 120 as an example, the second wall 122 may be the side wall or the top wall of the housing 120.

In some embodiments, the second wall 122 may be a wall directly connected to the first wall 121.

In this example, the outer peripheral surface of the electrode assembly 130 refers to the surface of the electrode assembly 130 facing the second wall 122. The first gap 132 is formed between the outer peripheral surface of the electrode assembly 130 and the second wall 122 to facilitate the flowing of airflow.

The fluid channel 164 being in communication with the first gap 132 means that at least one opening of the fluid channel 164 is in communication with the first gap 132 and the airflow in the first gap 132 can flow toward a preset position along the fluid channel 164.

In this example, by forming the first gap 132: in one aspect, a space for the flowing of airflow can be formed at the outer peripheral surface of the electrode assembly 130, and during the flowing of airflow, the flowing airflow can bring the heat generated at the outer peripheral surface of the electrode assembly 130 to the fluid channel 164, thus improving the cooling performance at the outer peripheral surface of the electrode assembly 130 and reducing the possibility of local temperature rise at the outer peripheral surface of the electrode assembly 130; in another aspect, as the airflow flows from the first gap 132 to the fluid channel 164, the temperature of the second wall 122 at a position close to the outer peripheral surface of the electrode assembly 130 can be reduced by the flowing of the airflow, and thereby the possibility of deformation of the second wall 122 at a position close to the outer periphery of the electrode assembly 130 can be reduced.

In this example, the first gap 132 may be in communication with one fluid channel 164; in some examples, the plurality of fluid channels 164 on the exhaust structure 160 are in communication with the first gap 132.

Referring to FIG. 4 and FIG. 5, in some examples, the housing 120 includes a second wall 122, a second gap 161c is formed between the outer peripheral surface of the exhaust structure 160 and the second wall 122 of the housing 120, and the fluid channel 164 is in communication with the second gap 161c.

In this example, the second wall 122 may be the same as the second wall 122 described in the previous example, and the second wall 122 in this example may also be at a different position than the wall surface in the previous example.

In this example, the outer peripheral surface of the exhaust structure 160 refers to the surface of the exhaust structure 160 facing the second wall 122. The outer peripheral surface of the exhaust structure 160 may be the outer peripheral surface in the first direction described in any one of the above examples. By forming the second gap 161c between the outer peripheral surface of the exhaust structure 160 and the second wall 122, at least a part of the surface of the exhaust structure 160 facing the corresponding second wall 122 is not in contact with the second wall 122. In some embodiments, the surface of the exhaust structure 160 facing the corresponding second wall 122 is spaced apart from the second wall 122.

In this example, the fluid channel 164 being in communication with the second gap 161c means that at least one opening of the fluid channel 164 is in communication with the second gap 161c, the airflow in the second gap 161c can flow toward a preset position along the fluid channel 164, and thereby the flow performance of airflow in the battery cell 110 can be improved.

In this example, by forming the second gap 161c, the airflow can be made to flow toward the fluid channel 164 along the second gap 161c, such that the temperature of the second wall 122 close to the outer peripheral surface of the exhaust structure 160 is reduced by the flowing of airflow, and thereby the possibility of deformation of the second wall 122 close to the outer peripheral surface of the exhaust structure 160 is reduced.

Referring to FIG. 4 and FIG. 5, in some examples, in some examples, the housing 120 includes a second wall 122, a first gap 132 is formed between the outer peripheral surface of the electrode assembly 130 and the second wall 122, the fluid channel 164 is in communication with the first gap 132, a second gap 161c is formed between the outer peripheral surface of the exhaust structure 160 and the second wall 122 of the housing 120, and the fluid channel 164 is in communication with the second gap 161c.

In this example, the second gap 161c and the first gap 132 may be in communication with the same fluid channel 164, and in this example, the second gap 161c and the first gap 132 may be in communication with different fluid channels 164.

Since the exhaust structure 160 is disposed between the electrode assembly 130 and the first wall 121, in one aspect, by providing the first gap 132 and the second gap 161c, the airflow at the outer peripheral surface of the electrode assembly 130 can be made to flow toward the first wall 121 along the fluid channel 164, thereby facilitating the flowing of airflow at the outer peripheral surface of the electrode assembly 130 to a preset position to improve the flow performance of the airflow inside the battery cell 110.

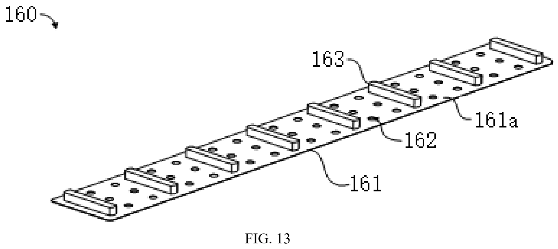

Referring to FIG. 4 to FIG. 13, in some examples, the exhaust structure 160 includes a plate body 161. The plate body 161 includes a first surface 161b disposed along the thickness direction of the plate body 161, and the fluid channel 164 is disposed on the first surface 161b.

The plate body 161, as the main structure of the exhaust structure 160, is installed between the first wall 121 and the electrode assembly 130. The first surface 161b is a surface in the thickness direction of the plate body 161.

In this example, by providing the fluid channel 164 on the first surface 161b, the surface in the thickness direction of the plate body 161 can be sufficiently utilized to increase the total area of the fluid channels 164 of the fluid channel 164 on the exhaust structure 160, increase the flow space of the airflow, and improve the flow performance of the airflow.

In this example, the thickness direction of the plate body 161 may be arranged perpendicular to the first direction described in any one of the above examples.

In this example, the thickness direction of the plate body 161 is the same as the thickness direction of the first wall 121.

In this example, the first surface 161b may be disposed facing the first wall 121, and the fluid channel 164 is disposed on a side of the plate body 161 facing the first wall 121, such that the airflow at the side of the plate body 161 facing the first wall 121 can flow toward a preset position. In this example, the first surface 161b may also be disposed facing the electrode assembly 130 to allow the airflow at the side of the plate body 161 facing the electrode assembly 130 to flow toward a preset position.

Referring to FIG. 4 and FIG. 5, in some examples, the thickness of the plate body 161 in the thickness direction 4C of the plate body 161 is H, where H is not smaller than 0.05 mm and not greater than 1.0 mm. In this example, when the thickness of H is too small, the structural strength of the plate body 161 becomes small, and the plate body 161 is easily deformed or broken; when the thickness H of the plate body 161 is too large, since the exhaust structure 160 occupies an excessively large internal space of the battery cell 110, the volume of the electrode assembly 130 may be correspondingly reduced, thereby easily causing a reduction in the energy density of the battery cell 110. Optionally, H may be selected from 0.05 mm, 0.1 mm, 0.2 mm, 0.3 mm, 0.4 mm, 0.5 mm, 0.6 mm, 0.8 mm, and 1.0 mm, or H may also be selected from any other value within the above interval. Further optionally, in some examples, H is not smaller than 0.2 mm and not greater than 0.4 mm.

In some examples, the depth of the fluid channel 164 in the thickness direction of the plate body 161 is H0, and the depth H0 of the fluid channel 164 is not smaller than 0.1 mm and not greater than 5 mm; when the depth H0 of the fluid channel 164 is too small, the effective vent area of the fluid channel 164 is relatively small, such that the venting performance of the fluid channel 164 is reduced; when the depth H0 of the fluid channel is too large, the structure of the plate body 161 is reduced, and the thickness of the plate body 161 must be increased to ensure the structural strength of the plate body 161, and the space occupied by the exhaust structure 160 may increase, thereby reducing the energy density of the battery cell 110. In this example, H0 may be selected from 0.1 mm, 0.2 mm, 0.5 mm, 0.8 mm, 1.0 mm, 1.6 mm, 2.5 mm, 4 mm, 5 mm, or any other value within the above interval. Optionally, in some examples, the depth H0 is not smaller than 0.2 mm and not greater than 0.8 mm.

In some examples, the first surface 161b is provided with a supporting block 163, and a fluid channel 164 is formed around the supporting block 163.

The supporting block 163 is disposed on the first surface 161b, and the supporting block 163 may be fixedly connected to the plate body 161, or the supporting block 163 may not be fixed to the plate body 161. The supporting block 163 serves to form a fluid channel 164 at a side of the plate body 161 where the first surface 161b is located to allow the airflow to flow toward a preset position along the fluid channel 164.

In this example, since the exhaust structure 160 is disposed between the first wall 121 and the electrode assembly 130, the supporting block 163 disposed on the first surface 161b may be used for increasing the overall thickness of the exhaust structure 160, thus increasing the distance between the electrode assembly 130 and the first wall 121, and thereby increasing the space between the electrode assembly 130 and the first wall 121 and improving the flow performance of airflow.

In this example, a fluid channel 164 is formed around the supporting block 163; the shape of the supporting block 163 may be selected as the case may be, the supporting block 163 may be a rectangular parallelepiped, a cylinder, an annular body, or a combination of multiple shapes, and a flow channel for the flowing of airflow is formed between the outer surface of the supporting block 163 and the first surface 161b.

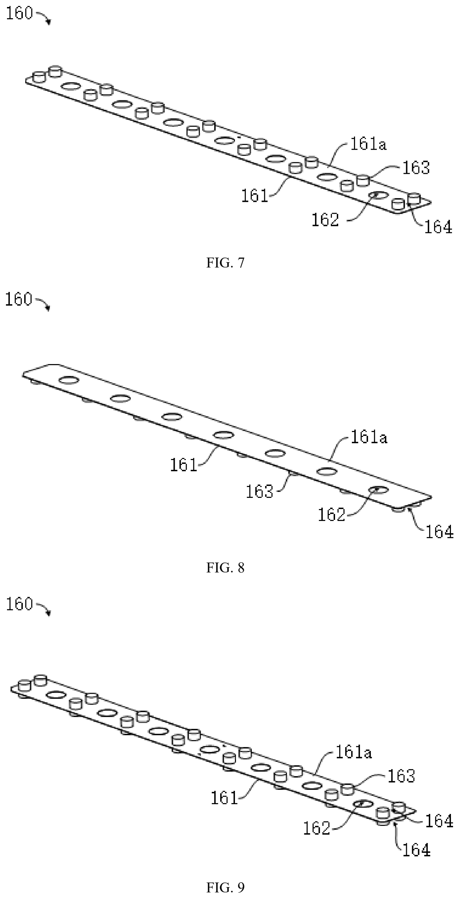

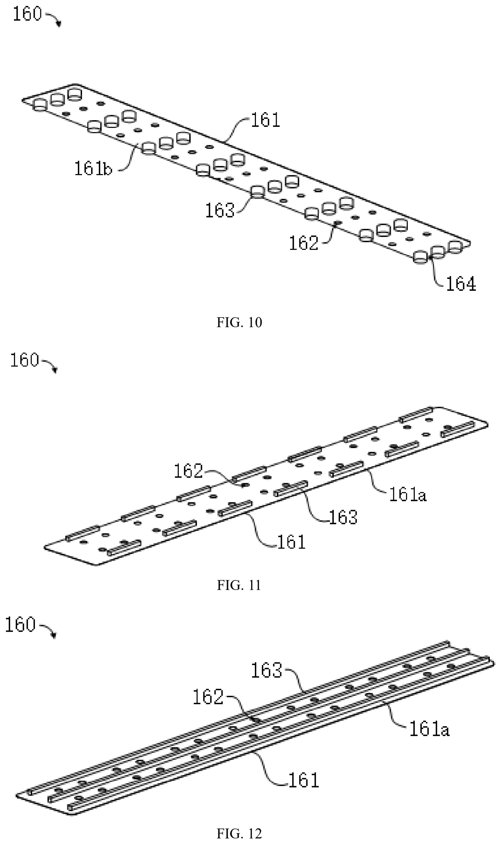

Referring to FIG. 9 and FIG. 10, in some examples, the first surface 161b is provided with a plurality of supporting blocks 163, and fluid channels 164 are formed between the plurality of supporting blocks 163.

In this example, by providing a plurality of supporting blocks 163, a plurality of supporting positions can be formed on the first surface 161b to distribute the acting force applied to the plate body 161, thereby reducing the deformation of the plate body 161 due to stress concentration. By forming the fluid channels 164 between the plurality of supporting blocks 163, the space between the supporting blocks 163 can be sufficiently utilized, and the shaping of the fluid channels 164 is facilitated while the structural strength of the exhaust structure 160 is improved.

In this example, at least two supporting blocks 163 of the plurality of supporting blocks 163 have a gap therebetween to form a fluid channel 164. Optionally, the plurality of supporting blocks 163 are spaced apart from one another on the first surface 161b, such that a plurality of fluid channels 164 can be formed on the first surface 161b to improve the exhaust performance of the exhaust structure 160.

In this example, the plurality of supporting blocks 163 may be disposed on the first surface 161b in a regular arrangement mode, which means that the plurality of supporting blocks 163 are regularly distributed along a preset direction, and thereby relatively regular fluid channels 164 can be formed on the first surface 161b. In this example, the plurality of supporting blocks 163 may also be irregularly distributed, such that irregular fluid channels 164 are formed on the first surface 161b.

In some examples, the plurality of supporting blocks 163 are arranged in an array; in this example, the plurality of supporting blocks 163 may be distributed in a matrix, the plurality of supporting blocks 163 may be in an annular array, or the plurality of supporting blocks 163 may be in a linear array according to a preset track.

By arranging in an array: in one aspect, the plurality of supporting block 163 can be installed or shaped on the plate body 161 according to a predetermined design, and by forming the regular mode of distribution, the shaping equipment of the supporting block 163 can be simplified, thus improving the shaping efficiency of the supporting blocks 163; in another aspect, since the plurality of supporting blocks 163 are arranged in an array, the stress distribution on the plate body 161 is relatively more even, which helps to promote the intensity of the exhaust structure 160 and reduce the possibility of deformation of the plate body 161.

In some examples, the plurality of supporting blocks 163 are arranged in the width direction of the plate body 161; in this example, the plurality of supporting blocks 163 may be distributed along the length direction of the plate body 161 to form a plurality of columns, and the plurality of supporting blocks 163 may be a plurality of rows extending along the length direction of the plate body 161, such that the force distribution in the length direction of the plate body 161 is relatively more even, and thereby the deformation of the plate body 161 in the length direction can be reduced.

In some examples, the plurality of supporting blocks 163 are arranged in the length direction of the plate body 161; in this example, the plurality of supporting blocks 163 may be distributed along the width direction of the plate body 161 to form a plurality of columns, and the plurality of supporting blocks 163 may be a plurality of rows extending along the width direction of the plate body 161, such that the force distribution in the width direction of the plate body 161 is relatively more even, and thereby the deformation of the plate body 161 in the width direction can be reduced.

In some examples, the supporting block 163 is a rectangular block or a cylinder. In this example, when the supporting block 163 is a rectangular block, the length direction of the supporting block 163 may be parallel to the length direction of the plate body 161; when the supporting block 163 in this example is cylindrical, one end of the supporting block 163 in the axial direction is connected to the first surface 161b, and the other end of the supporting block 163 in the axial direction is disposed distal to the first surface 161b. By allowing the supporting block 163 to be a rectangular block or a cylindrical block, it is possible to facilitate the shaping of the supporting block 163 by adopting a regular shape, and thus the shaping equipment of the supporting block 163 can be simplified and the production efficiency of the exhaust structure 160 can be improved.

In some embodiments, as shown in FIG. 9, in the thickness direction of the plate body 161, the plate body 161 has a second surface 161a disposed opposite to the first surface 161b. Both the first surface 161b and the second surface 161a are provided with fluid channels 164, and the arrangement of the fluid channels 164 of the first surface 161b and the arrangement of the fluid channels 164 of the second surface 161a may be the same or different. Allowing both the first surface 161b and the second surface 161a to be provided with fluid channels 164 can increase the flow area of the fluid channels 164.

In some examples, the plate body 161 is provided with a via 162. The via 162 penetrates through the plate body 161 along the thickness direction of the plate body 161, and the via 162 is in communication with the fluid channels 164.

The via 162 is a through hole penetrating through the plate body 161 for communicating the two surfaces of the plate body 161 in the thickness direction.

In this example, the via 162 is in communication with the two surfaces of the plate body 161 in the thickness direction, such that the airflow on the two surfaces of the plate body 161 in the thickness direction can flow toward each other. In this example, the vias 162 are used for communicating with the fluid channels 164, such that the airflow can flow toward the fluid channels 164 along the thickness direction of the plate body 161, and thereby the flow path for airflow in the battery cell 110 can be increased to improve the flow performance of airflow in the battery cell 110.

In this example, taking the case where the fluid channel 164 is disposed on the first surface 161b of the plate body 161 as an example, in the thickness direction of the plate body 161, the plate body 161 has a second surface 161a disposed opposite to the first surface 161b, one end of the via 162 is in communication with the fluid channel 164, and the other end of the via 162 penetrates to the second surface 161a, such that the airflow at the second surface 161a can flow toward the side where the first surface 161b is located, and thus the airflow at the side where the second surface 161a is located can flow toward a preset position after sequentially passing through the via 162 and the fluid channel 164.

In this example, there may be one via 162, or there may also be a plurality of vias 162. When the plate body 161 is provided with a plurality of vias 162, the plurality of vias 162 may be distributed at intervals for forming, at a plurality of portions of the plate body 161, a passage for the airflow to flow along the thickness direction of the plate body 161. When a plurality of vias 162 are provided, the plurality of vias 162 may be in communication with the same fluid channel 164, or the plurality of vias 162 may be used for communicating with different fluid channels 164.

In this example, the via 162 may be a circular hole, an elliptical hole, or a polygonal hole structure; when the plate body 161 is provided with a plurality of vias 162, the plurality of vias 162 may have the same shape and/or size, or the vias 162 at different positions of the plate body 161 may have different shapes and/or sizes.

Referring to FIG. 5, in some examples, the hole diameter of the via 162 is P; P is not smaller than 0.5 mm and not greater than 10 mm. When the hole diameter of the via 162 is greater than 10 mm, the structural strength of the plate body 161 is reduced as the hole diameter of the via 162 increases, and at the same time, the powdered material of the electrode assembly 130 easily moves toward the first wall 121 through the via 162; when the hole diameter of the via 162 is smaller than 0.5 mm, the exhaust effect of the via 162 may be reduced; the inner diameter of the via 162 in this example may be 0.5 mm, 2 mm, 3 mm, 4 mm, 5 mm, 6 mm, 7 mm, 8 mm, 9 mm, or 10 mm, and may be selected from any other value within the above range of hole diameter. Optionally, in this example, the inner diameter of the via 162 is not smaller than 2 mm and not greater than 4 mm.

The powdered material of the electrode assembly 130 may be a positive electrode active material or a negative electrode active material.

The wall surface of the insulating film facing the exhaust structure 160 may also be provided with some through holes to increase the passage for the electrolytic solution to flow through. The through holes of the insulating film may be arranged in a staggered manner relative to the vias 162 of the plate body 161.

Referring to FIG. 4 and FIG. 5, in some examples, the via 162 is arranged in an at least partially staggered manner relative to the supporting block 163.

In this example, the vias 162 are in communication with the fluid channels 164, such that the vias 162 can form passages for airflow to flow toward the fluid channels 164, and the supporting blocks 163 cannot completely shield the vias 162 by arranging the vias 162 in an at least partially staggered manner relative to the supporting blocks 163, such that the vias 162 can be kept in a relatively good communicating state, and the flow performance of airflow can be improved. Optionally, in some examples, the vias 162 are arranged in a completely staggered manner relative to the supporting blocks 163, such that the supporting blocks 163 do not shield the vias 162, and thus the flow space of the airflow can be increased.

Referring to FIG. 7 to FIG. 13, in some examples, there are a plurality of columns of supporting blocks 163, with the via 162 disposed between two adjacent columns of supporting blocks 163. In this example, the supporting blocks 163 may be arranged in a plurality of columns along the length direction of the plate body 161, or may be arranged in a plurality of columns along the width direction of the plate body 161. A fluid channel 164 is formed between two adjacent columns of supporting blocks 163, and the vias 162 may be used for communicating with the fluid channel 164 to improve the flow performance of airflow in the battery cell 110.

In this example, one or more vias 162 may be disposed between two adjacent columns of supporting blocks 163, and the number of vias 162 may be determined according to the distance between two adjacent columns of supporting blocks 163, the shape of the via 162, the size of the via 162, and the like.

In some examples, referring to FIGs. 10-13, the vias 162 may be arranged in a plurality of columns, with one or more vias 162 being provided for each column of vias.

In this example, the fluid channels 164 between two adjacent columns of supporting blocks 163 may be in communication with each other, or the fluid channels 164 between two adjacent columns of supporting blocks 163 may not be in communication with each other.

In this example, by arranging a plurality of columns of supporting blocks 163, the deformation of the plate body 161 due to stress concentration can be reduced, and by disposing the vias 162 between two adjacent columns of supporting blocks 163, the flow performance of airflow at both sides of the plate body 161 in the thickness direction can be improved, and thereby the temperature unevenness at both sides of the plate body 161 in the thickness direction can be improved by the flowing of airflow, thus reducing the problem of deformation of the plate body 161 due to uneven heating.

Referring to FIG. 4, in some examples, the first surface 161b faces the first wall 121. In this example, the supporting blocks 163 are disposed on the first surface 161b, and the first surface 161b is disposed facing away from the electrode assembly 130, such that the fluid channels 164 formed at the periphery of the supporting blocks 163 may be used for guiding the airflow toward the side where the first wall 121 is located, and when thermal runaway occurs in the battery cell 110, the airflow may flow more rapidly toward a preset position along the side where the first wall 121 is located.

In this example, the supporting blocks 163 may also be used for suspending the plate body 161 above the outer side of the first wall 121, and the plate body 161 may be used for supporting the electrode assembly 130 to reduce the damage to the electrode assembly 130 due to stress concentration.

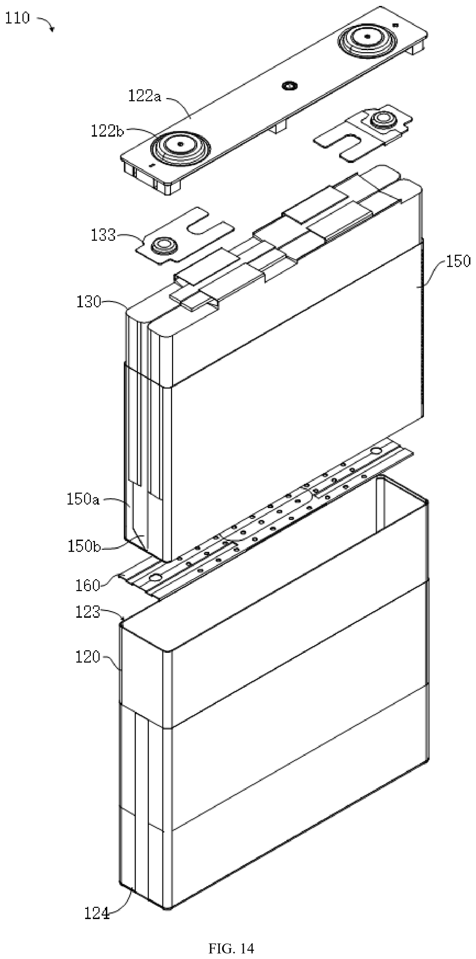

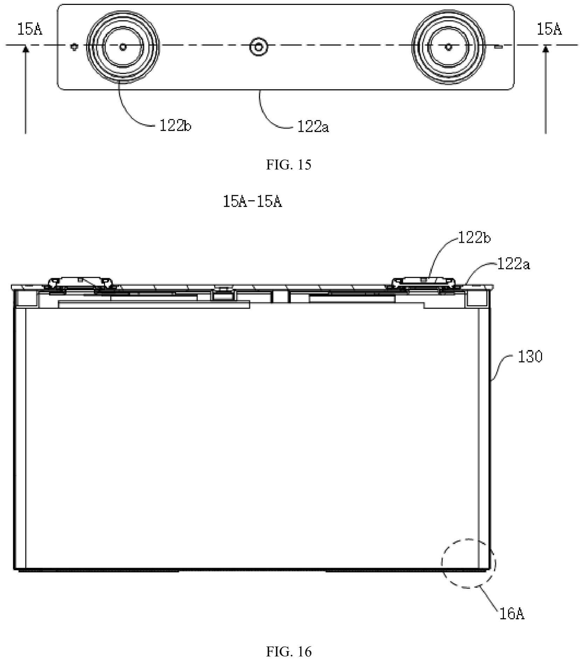

Referring to FIG. 14 to FIG. 17, in some examples, the battery cell 110 further includes an insulating film 150. The insulating film 150 is wrapped outside the electrode assembly 130, and the insulating film 150 is provided with a first through hole 151. The exhaust structure 160 is disposed between the insulating film 150 and the first wall 121, the exhaust structure 160 is provided with a second through hole 165, and the second through hole 165 is aligned with the first through hole 151.

In this example, the insulating film 150 has a wall surface facing the exhaust structure 160, and the first through hole 151 is formed on the wall surface of the insulating film 150 facing the exhaust structure 160.

In this example, the shapes and sizes of the first through hole 151 and the second through hole 165 may be the same, and the shapes and sizes of the first through hole 151 and the second through hole 165 may be determined as the case may be.

The first through hole 151 and the second through hole 165 may be circular holes, elliptical holes, or polygonal hole structures.

The second through hole 165 may be partially or completely aligned with the first through hole 151.

The insulating film 150 is disposed outside the electrode assembly 130, and the insulating film 150 at least partially wraps the electrode assembly 130 for separating the electrode assembly 130 from the housing 120, thus reducing the contact of the electrode assembly 130 with the housing 120.

The exhaust structure 160 is disposed between the insulating film 150 and the first wall 121, that is, the exhaust structure 160 is located outside the insulating film 150, such that the exhaust structure 160 serves to form a separation between the insulating film 150 and the first wall 121.

In some examples, a protective film 124 is provided outside the housing 120, and the protective film 124 may be made of an insulating film.

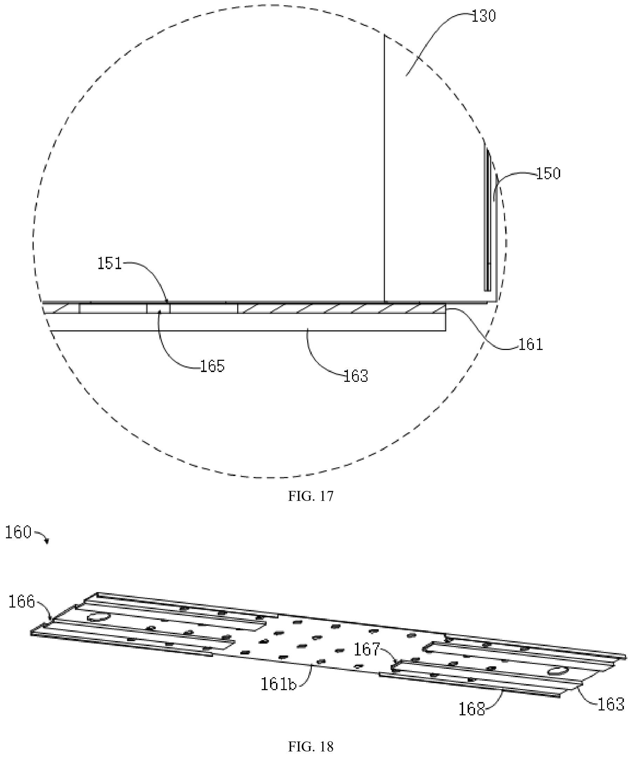

Referring to FIG. 17, the insulating film 150 is provided with a first through hole 151, the exhaust structure 160 is provided with a second through hole 165, and the first through hole 151 and the second through hole 165 are disposed aligned with each other, such that the first through hole 151 and the second through hole 165 can be used for positioning each other, and thus the insulating film 150 and the exhaust structure 160 can be installed according to a preset position when being installed, and thereby the insulating film 150 and the exhaust structure 160 maintain a preset installation position and a preset installation state in the battery cell 110, improving the stability of the internal structure of the battery cell 110.

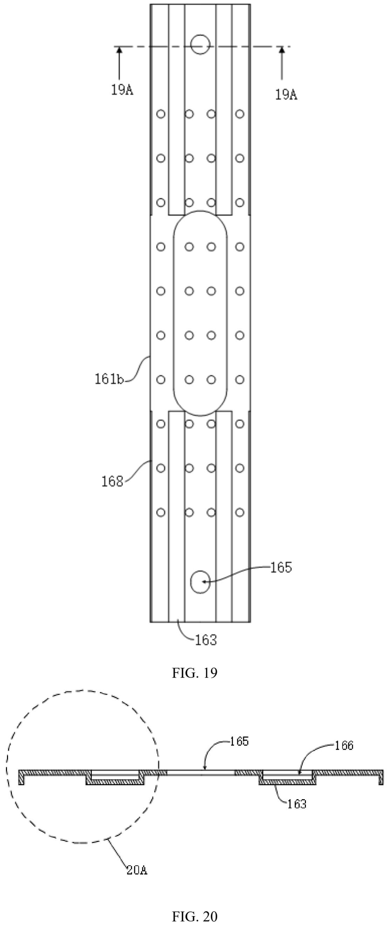

Referring to FIGs. 18-22, in some examples, the second through hole 165 is disposed on the supporting block 163. Since the supporting block 163 is a protrusion protruding from the surface of the plate body 161, when the second through hole 165 is disposed on the supporting block 163, the blocking of the second through hole 165 may be facilitated, reducing the movement of powders along the second through hole 165 along a direction away from the electrode assembly 130, which may further help to improve the reliability of the battery cell 110.

In some examples, the supporting block 163 is a hollow structure protruding with respect to the plate body 161, the second through hole 165 is disposed on a bottom wall 163a of the supporting block 163, and the bottom wall 163a of the supporting block 163 abuts against the first wall 121.

In this example, by allowing the supporting block 163 to be a hollow structure: in one aspect, the overall weight of the exhaust structure 160 can be reduced, and thus the energy density of the battery cell 110 can be increased; in another aspect, when a hole is formed in the supporting block 163, the length of the second through hole 165 may be relatively reduced to facilitate the processing; in yet another aspect, since the bottom wall 163a of the supporting block 163 abuts against the first wall 121, the blocking of the second through hole 165 can be facilitated, and in this example, the second through hole 165 may be blocked by an insulating member, Meanwhile, the first wall 121 generates a supporting and positioning effect on the supporting block 163, such that the supporting block 163 and the plate body 161 can be kept at a preset position in the battery cell 110, and thereby the structural stability inside the battery cell 110 can be improved.

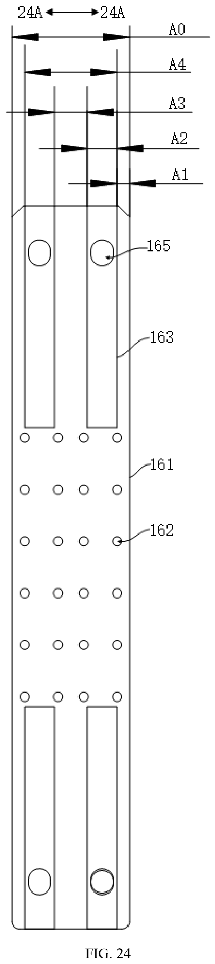

Referring to FIG. 24, in this example, the second through hole 165 has a hole diameter smaller than the width of the supporting block 163, thus forming the second through hole 165 in the bottom wall 163a of the supporting block 163.

Referring to FIG. 24, when the plate body 161 is provided with a plurality of supporting blocks 163, taking the case where the supporting blocks 163 are spaced apart from each other along the width direction of the plate body 161, an airflow channel is formed between two adjacent supporting blocks 163. Taking the case where the first surface 161b of the plate body 161 is provided with two rows of the supporting blocks 163 along the width direction as an example, the plate body 161 and the supporting blocks 163 are projected in a plane parallel to the first surface 161b, the total width of the plate body 161 in the width direction of the plate body 161 is A0, and the distance in the width direction between the supporting block 163 located at the edge of the plate body 161 and the edge of the plate body 161 is A1; in this example, the width direction of the plate body 161 may be the 24A direction as shown in FIG. 24. In the width direction of the plate body 161, the width of each supporting block 163 is A2, the distance between the opposite end surfaces of two supporting blocks 163 is A3, and the distance between the surfaces of two supporting blocks 163 facing away from each other is A4.

Further, in some examples, A1 is not smaller than 0.5mm and not greater than 300 mm, where A1 may be selected from 0.5 mm, 10 mm, 50 mm, 90 mm, 150 mm, 190 mm, 240 mm, 300 mm, or any value within the above interval. When the selected value of A1 is too large, the distance between the supporting block 163 and the edge of the plate body 161 in the width direction is too large, such that the supporting block 163 is relatively closer to the middle position of the plate body 161 in the width direction, which easily causes stress concentration on the plate body 161 and thus may possibly reduce the structural strength of the plate body 161; when the selection value of A1 is too small, the gap between the edge of the supporting block 163 and the edge of the plate body 161 in the width direction is too small, which may cause the airflow channel on the edge side of the supporting block 163 to be too small, thereby reducing the airflow volume on the edge side of the supporting block 163. Further optionally, A1 is not smaller than 0.5 mm and not greater than 90 mm.

In some examples, A2 is not smaller than 0.5 mm and not greater than 300 mm, where A2 may be selected from 0.5 mm, 10 mm, 50 mm, 100 mm, 150 mm, 190 mm, 240 mm, 300 mm or any value within the above interval. When the selected value of A2 is too large, the width of the fluid channel 164 disposed at the outer periphery of the supporting block 163 is reduced on the premise that the width of the plate body 161 is constant, and the exhaust performance of the exhaust structure 160 may be reduced; when the selected value of A2 is too small, the structural strength of the supporting block 163 is relatively low, which affects the overall strength of the exhaust structure 160, and when the supporting block 163 and the plate body 161 are connected and fixed to each other, the supporting block 163 is also easily deformed, which further affects the product quality. In some examples, the plate body 161 is provided with a via 162 described in any one of the above examples; when the selected value of A2 is too small, the distance between adjacent supporting blocks 163 is too small, which may increase the difficulty in forming the via 162. Optionally, A2 is not smaller than 0.5 mm, such that when the supporting block 163 and the plate body 161 are installed and fixed to each other, the supporting block 163 is not easily deformed, and thus the structural strength of the exhaust structure 160 can be improved; besides, A2 is not greater than 90 mm, thus facilitating the installation and fixation.

In some examples, A3 is not smaller than 0.5 mm and not greater than 300 mm. In this example, A3 may be selected from 0.5 mm, 10 mm, 50 mm, 100 mm, 150 mm, 190 mm, 240 mm, 300 mm, or any value within the above interval. On the premise that the width of the plate body 161 is constant, if A3 is too small, the width of the fluid channel 164 formed between the supporting blocks 163 is too small, and thus the flow performance of airflow in the battery cell 110 may be reduced; when the selected value of A3 is too large, the width of the corresponding supporting block 163 is reduced in order to secure the distance between the adjacent supporting blocks 163, and thus the structural strength of the supporting block 163 may be reduced. Further optionally, A3 is not smaller than 0.5 mm and not greater than 90 mm, such that the fluid channel 164 between adjacent supporting blocks 163 has relatively good flow performance, and the width of the supporting block 163 is also suitable for processing, thus enabling the exhaust structure 160 to have relatively high structural strength on the premise of having relatively good exhaust performance.

In some examples, A4 is not greater than A0, and A4 is not smaller than 1 mm and not greater than 300 mm; in this example, the selected value of A4 may be 1 mm, 50 mm, 100 mm, 150 mm, 200 mm, 250 mm, 300 mm, or any other value within the above interval. When the value of A4 is too small, the total width of the adjacent supporting blocks 163 is relatively small, such that the overall structural strength of the supporting blocks 163 is reduced, and when the supporting block 163 and the plate body 161 are installed and fixed to each other, the parts where the two are connected are easily broken or melted through; when the selected value of A4 is too large, the distance A1 between the supporting block 163 and the edge of the plate body 161 in the width direction is also relatively smaller on the premise that the entire width of the plate body 161 is constant, thereby affecting the flow performance of the airflow channel at the edge of the supporting block 163. Optionally, A4 is not smaller than 1 mm and not greater than 200 mm, such that the supporting block 163 can match the size of the plate body 161 while enabling the fluid channel 164 to have relatively good venting performance.

In some examples, the difference between A0 and A4 is not smaller than -50 mm, and not greater than 50 mm. In this example, the supporting block 163 may partially protrude outside the plate body 161 in the width direction, and a fluid channel 164 is formed between one end surface of the supporting block 163 on a side facing the plate body 161 and a side wall 163b at the edge of the plate body 161 in the width direction. Optionally, the difference between A0 and A4 is greater than 0 and not greater than 10 mm, which may enable the supporting block 163 to better fit the plate body 161, forming the fluid channel 164 at the periphery of the supporting block 163.

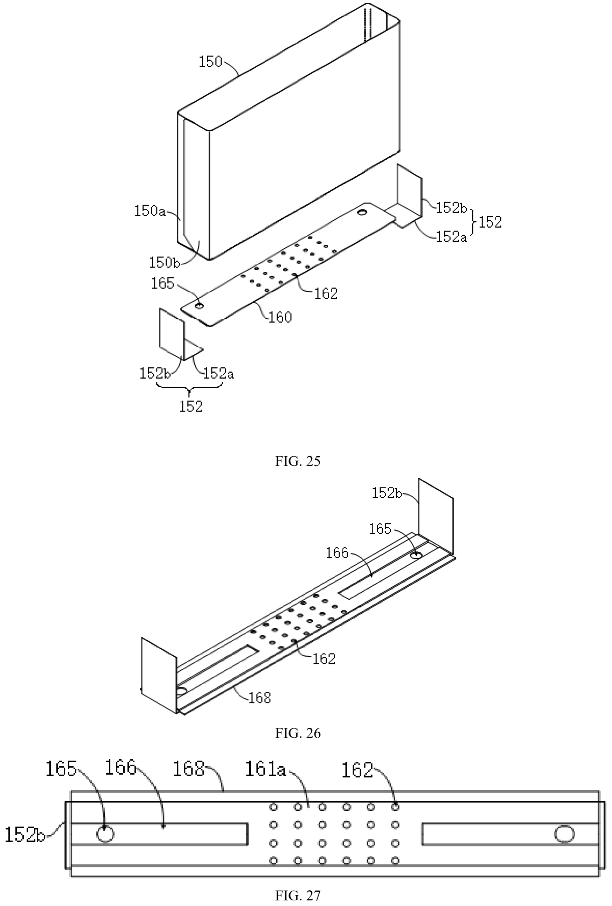

In some examples, referring to FIGs. 25-27, the battery cell 110 further includes a insulating sheet 152. The insulating sheet 152 includes a first portion 152a, and the first portion 152a is disposed at least partially on a side of the exhaust structure 160 distal to the electrode assembly 130 and covers the second through hole 165.

One or more insulating sheets 152 may be provided. As shown in FIG. 25, two insulating sheets 152 may be disposed at two ends of the exhaust structure, respectively, to block the two second through holes 165 of the exhaust structure 160.

The first portion 152a covering the second through hole 165 means that the projections of the first portion 152a and the second through hole 165 coincide. The first portion 152a may be directly attached to the edge of the opening of the second through hole 165 or may have a certain distance from the second through hole 165 in the thickness direction of the first wall.

In this example, the insulating sheet 152 at least partially serves as a barrier between the exhaust structure 160 and the first wall 121, and the insulating sheet 152 results in an insulating effect. The insulating sheet 152 at least partially covers the second through hole 165 to reduce the probability that powders on the side where the electrode assembly 130 is located pass through the second through hole 165, and thus the reliability of the battery cell 110 can be improved.

In this example, the shape of the insulating sheet 152 may be identical to the shape of the exhaust structure 160. Taking the case where the plate body 161 is a rectangular parallelepiped structure as an example, the insulating sheet 152 may also be of a rectangular sheet-like structure. In this example, the first portion 152a of the insulating sheet 152 may be a partial structure on the insulating sheet 152 for connecting to the exhaust structure 160.

When the exhaust structure 160 includes a plurality of supporting blocks 163, the battery cell 110 may be provided with a plurality of insulating sheets 152. Taking the case where two supporting blocks 163 are respectively disposed at two ends of the plate body in the length direction as an example, the insulating sheet 152 may be disposed at both ends of the plate body in the length direction. The first portion 152a of the insulating sheet 152 serves as a barrier between the supporting block 163 and the first wall 121, and the first portion 152a of the insulating sheet 152 at least partially shields the second through hole 165.

In this example, the insulating sheet 152 may be made of tape or other material capable of providing an insulating effect.

In some examples, the first portion 152a is attached at the opening of the second through hole 165. In this example, the first portion 152a of the insulating sheet 152 may be used for blocking the opening of the second through hole 165, thus blocking the moving of the powders of the electrode assembly 130 toward the first wall 121 through the second through hole 165.

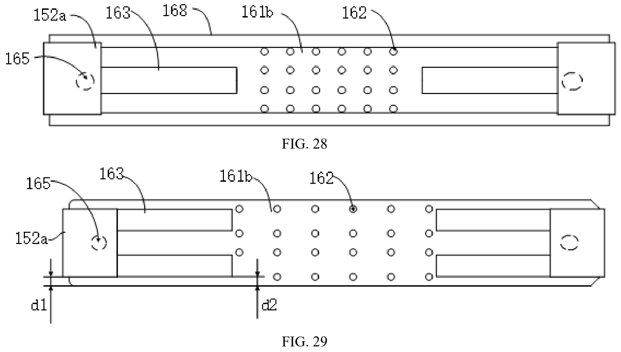

Referring to FIG. 28, in some examples, in the width direction of the plate body 161, the first portion 152a is at a preset distance from at least one edge of the plate body 161 in the width direction.

In this example, the plate body 161 and the first portion 152a of the insulating sheet 152 are projected on a plane parallel to the first surface 161b, and a gap is formed between the first portion 152a of the insulating sheet 152 and at least one edge of the plate body 161 in the width direction; the width of the gap is the above-mentioned preset distance. In this example, the first portion 152a may be at a preset distance from one of the edges of the plate body 161 in the width direction, and the first portion 152a may also be at a preset distance from both corresponding edges of the plate body 161 in the width direction. When the first portion 152a is at a preset distance from both corresponding edges of the plate body 161 in the width direction, the preset distances between the first portion 152a and both corresponding edges of the plate body 161 in the width direction may be equal or unequal. In some examples, the preset distance between the first portion 152a and the edge of the plate body 161 in the width direction may be the A1 described in the above examples.

In this example, by allowing the first portion 152a to be at a preset distance from at least one edge of the plate body 161 in the width direction, the first portion 152a does not completely block the airflow channel at the edge of the plate body 161 in the width direction, and thus the exhaust performance of the exhaust structure 160 can be improved.

In some examples, in the width direction of the plate body 161, the supporting block 163 is at a preset distance from at least one edge of the plate body 161 in the width direction.

In this example, the plate body 161 and the supporting block 163 are projected on a plane parallel to the first surface 161b, and a gap is formed between the supporting block 163 and at least one edge of the plate body 161 in the width direction; the width of the gap is the above-mentioned preset distance. In this example, the supporting block 163 may be at a preset distance from one of the edges of the plate body 161 in the width direction, and the supporting block 163 may also have a preset distance from both corresponding edges of the plate body 161 in the width direction. When the supporting block 163 is at a preset distance from both corresponding edges of the plate body 161 in the width direction, the preset distances between the supporting block 163 and both corresponding edges of the plate body 161 in the width direction may be equal or unequal. In some examples, the preset distance between the supporting block 163 and the edge of the plate body 161 in the width direction may be the A1 described in the above examples.

In this example, by allowing the supporting block 163 to be at a preset distance from at least one edge of the plate body 161 in the width direction, the supporting block 163 does not completely block the airflow channel at the edge of the plate body 161 in the width direction, and thus the exhaust performance of the exhaust structure 160 can be improved.

In some examples, in the width direction of the plate body 161, the first portion 152a is at a preset distance from at least one edge of the plate body 161 in the width direction, and the supporting block 163 is at a preset distance from at least one edge of the plate body 161 in the width direction.

Referring to FIG. 29, in this example, the plate body 161, the first portion 152a, and the supporting block 163 are projected on a plane parallel to the first surface 161b. A first interspace is formed between the first portion 152a and at least one edge of the plate body 161 in the width direction, and the width of the first interspace is d1. A second interspace is formed between the supporting block 163 and an edge of the plate body 161 in the width direction, and the width of the second interspace is d2. The first interspace and the second interspace may be located on the same side of the plate body 161 in the width direction or on different sides of the plate body 161 in the width direction. The widths of the first interspace and the second interspace may be equal or unequal. Taking the case where the first interspace and the second interspace are located on the same side of the plate body 161 and the first interspace is equal to the second interspace as an example, the gap formed between the supporting block 163 and the first portion 152a, and the edge of the plate body 161 can be used as the fluid channel 164 for the flowing of airflow, thus allowing the exhaust structure 160 to have a relatively good exhaust performance. In this example, the width of the first interspace and/or the second interspace may be equal to the A1 described in the above examples.

Referring to FIG. 14 and FIG. 25, in some examples, the insulating film 150 is folded to wrap the electrode assembly 130 and forms a first folded edge 150a and a second folded edge 150b overlapping each other at a side of the electrode assembly 130; the insulating sheet 152 further includes a second portion 152b, the second portion 152b is connected to the first portion 152a, and the second portion 152b fixes the first folded edge 150a and the second folded edge 150b.

In this example, the second portion 152b may be provided integrally with the first portion 152a, or the second portion 152b may be provided independently from the first portion 152a and connected and fixed to the first portion 152a.

The insulating film 150 is bent to wrap the sides of the electrode assembly 130, such that the edge parts of the insulating film 150 form a first folded edge 150a and a second folded edge 150b, and the first folded edge 150a and the second folded edge 150b overlap each other to wrap the side surface of the electrode assembly 130 at the corresponding position. The second portion 152b of the insulating sheet 152 is used for connecting the first folded edge 150a and the second folded edge 150b, so as to connect and fix the first folded edge 150a and the second folded edge 150b to each other, thereby reducing the warpage or deformation at the positions of the first folded edge 150a and the second folded edge 150b.

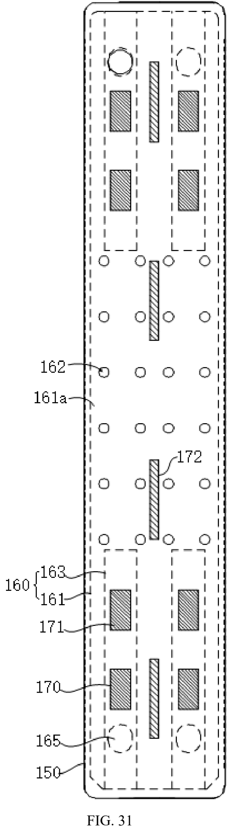

Referring to FIG. 31, in some examples, the supporting block 163 is provided independently from the plate body 161, and the second through hole 165 penetrates through the supporting block 163 and the plate body 161.

The second through hole 165 penetrating through the supporting block 163 and the plate body 161 means that the supporting block 163 and the plate body 161 are each provided with a hole, and the hole of the supporting block 163 and the hole of the plate body 161 jointly form the second through hole 165. In this example, when the supporting block 163 and the plate body 161 are positioned, the supporting block 163 and the plate body 161 may be positioned through the second through hole 165, thus facilitating the positioning and installation of the supporting block 163 and the plate body 161.

In this example, since the second through hole 165 is aligned with the first through hole 151, when the exhaust structure 160 and the insulating film 150 are positioned and installed with respect to each other, the insulating film 150, the plate body 161, and the supporting block 163 can be positioned and installed through the second through hole 165 and the first through hole 151, and thus the installation performance of the exhaust structure 160 can be improved.

In some examples, the supporting block 163 is provided independently from the plate body 161, and the plate body 161 is connected to the insulating film 150. By connecting the insulating film 150 to the plate body 161, the structural stability of the insulating film 150 and the plate body 161 within the battery cell 110 can be improved. In this example, for the plate body 161, the plate body 161 may be connected and fixed to the insulating film 150 by hot melting, gluing, snap-fit, or other means.

Still referring to FIG. 31, in some examples, the supporting block 163 is provided independently from the plate body 161, and the supporting block 163, the plate body 161 and the insulating film 150 are connected to each other. In this example, the supporting block 163 can be connected to the plate body 161 through hot melting, gluing, snap-fit, or other means, and the plate body 161 can be connected and fixed to the insulating film 150 through hot melting, gluing, snap-fit, or other means, such that the supporting block 163, the plate body 161 and the insulating film 150 are connected to form an integrated structure, and thus the displacement of the exhaust structure 160 and the insulating film 150 inside the battery cell 110 is reduced, which is helpful for improving the stability of the internal structure of the battery cell 110. In some examples, the supporting block 163 is in hot-melting connection to the plate body through the first weld mark 171, and there may be one or more first weld marks 171. Optionally, when the supporting block 163 is in hot-melting connection to the plate body through a plurality of first weld marks 171, the first weld marks 171 are spaced apart from each other to reduce the problem of the plate body being melted through or deformed due to concentrated welding heat. In some examples, the insulating film 150 is in hot-melting connection to the plate body 161 through a second weld mark 172. Optionally, there may be one or more second weld marks 172. When the insulating film is in hot-melting connection to the plate body through a plurality of second weld marks 172, the plurality of second weld marks 172 are spaced apart from each other to reduce the problem of the plate body being melted through or deformed due to concentrated welding heat.

In some examples, the supporting block 163 and the plate body 161 may also be in hot-melting connection to the insulating film 150 at the same position, which may improve the processing efficiency.

In some examples, the center of the second through hole 165 is disposed on one side of the center line of the plate body 161 in the length direction. Correspondingly, the center of the first through hole 151 of the insulating film 150 is also disposed at one side of the center line of the plate body 161 in the length direction. In this example, the second through hole 165 may be a circular hole, an elliptical hole, or a polygonal hole structure. The plate body 161 has a center line in the length direction, and the geometric center of the second through hole 165 does not coincide with the center line of the plate body 161 in the length direction, such that the center of the second through hole 165 is not located on the center line of the plate body 161 in the length direction, and thus the plate body 161 can be identified and positioned during installation, the second through hole 165 can play a fool-proof effect, and the possibility of erroneous installation is reduced.

When the second through hole 165 is formed in the bottom wall 163a of the supporting block 163, there may be a plurality of supporting block 163 in this example, and at least one second through hole 165 is provided in the bottom wall 163a of each supporting block 163.

In some examples, the center of the second through hole 165 is disposed on one side of the center line of the plate body 161 in the width direction.

Correspondingly, the center of the first through hole 151 of the insulating film 150 is also disposed on one side of the center line of the plate body 161 in the width direction.

In this example, the plate body 161 has a center line in the width direction, and the geometric center of the second through hole 165 does not coincide with the center line of the plate body 161 in the width direction, such that the center of the second through hole 165 is not located on the center line of the plate body 161 in the width direction, and thus the plate body 161 can be identified and positioned during installation, the second through hole 165 can play a fool-proof effect, and the possibility of erroneous installation is reduced. When the second through hole 165 is formed in the bottom wall 163a of the supporting block 163, there may be a plurality of supporting block 163 in this example, and at least one second through hole 165 is provided in the bottom wall 163a of each supporting block 163.

In some examples, the exhaust structure 160 includes a plurality of second through holes 165. The plurality of second through holes 165 are disposed on both sides of the center line of the plate body 161 in the length direction, and the plurality of second through holes 165 are asymmetric with respect to the center line of the plate body 161 in the length direction.

Correspondingly, the centers of the plurality of first through holes 151 of the insulating film 150 are also asymmetric with respect to the center line of the plate body 161 in the length direction.

In this example, the exhaust structure 160 has a center line in the length direction, and of the plurality of second through holes 165, at least two second through holes 165 are located on both sides of the center line of the plate body 161 in the length direction, respectively, and the second through holes 165 located on both sides of the center line of the plate body 161 in the length direction are asymmetric with respect to the center line of the plate body 161 in the length direction. This facilitates identification of the plate body 161, and when the plate body 161 is installed, this can allow for a fool-proof effect and reduce the possibility of erroneous installation. In some examples, the number of the second through holes 165 on both sides of the plate body 161 in the length direction is equal, and the second through holes 165 on both sides of the center line of the plate body 161 in the length direction may all be asymmetric with respect to the center line of the plate body 161 in the length direction, or some of the second through holes 165 may be asymmetric with respect to the center line of the plate body 161 in the length direction.

In some examples, the exhaust structure 160 includes a plurality of second through holes 165. The plurality of second through holes 165 are disposed on both sides of the center line of the plate body 161 in the width direction, and the plurality of second through holes 165 are asymmetric with respect to the center line of the plate body 161 in the width direction.

Correspondingly, the centers of the plurality of first through holes 151 of the insulating film 150 are also asymmetric with respect to the center line of the plate body 161 in the width direction.

In this example, the exhaust structure 160 has a center line in the width direction, and of the plurality of second through holes 165, at least two second through holes 165 are located on both sides of the center line of the plate body 161 in the width direction, respectively, and the second through holes 165 located on both sides of the center line of the plate body 161 in the width direction are asymmetric with respect to the center line of the plate body 161 in the width direction. This facilitates identification of the plate body 161, and when the plate body 161 is installed, this can allow for a fool-proof effect and reduce the possibility of erroneous installation. In some examples, the number of the second through holes 165 on both sides of the plate body 161 in the width direction is equal, and the second through holes 165 on both sides of the center line of the plate body 161 in the width direction may all be asymmetric with respect to the center line of the plate body 161 in the width direction, or some of the second through holes 165 may be asymmetric with respect to the center line of the plate body 161 in the width direction.

Referring to FIG. 31, in some examples, the exhaust structure 160 includes a plurality of supporting blocks 163, and each supporting block 163 is provided with a second through hole 165.

In this example, the plurality of supporting blocks 163 are each provided with a second through hole 165, and the supporting blocks 163 may be formed using a unified mold, such that the shaping mold of the supporting blocks 163 may be simplified, and the shaping cost of the supporting blocks 163 may be reduced.

In this example, since the plurality of supporting blocks 163 are each provided with a second through hole 165, the supporting blocks 163 can be identified through the second through holes 165, and thus the possibility that different supporting blocks 163 are installed to wrong positions can be reduced during installation.

Referring to FIG. 31, taking the case where a single supporting block 163 is a long strip as an example, the supporting block 163 is provided with a second through hole 165, and the center of the second through hole 165 is disposed at one side of the center line of the supporting block 163 in the length direction of the supporting block 163.

Referring to FIG. 25 and FIG. 31, in this example, the plurality of supporting blocks 163 are each provided with a second through hole 165, and the number of the first through holes 151 on the insulating film 150 is smaller than the number of the supporting blocks 163. Taking the case where the exhaust structure 160 has four supporting blocks 163 as an example, the four supporting blocks 163 are disposed in two rows and two columns on the plate body 161, the number of the first through holes 151 on the insulating film 150 may be two, and the positions of the two first through holes 151 may correspond to the positions of the second through holes 165 of two of the supporting blocks 163. In this way, the exhaust structure 160 may be prevented from being installed incorrectly.

In some examples, the supporting block 163 is provided integrally with the plate body 161.

The integral arrangement in this example may include that the supporting block 163 and the plate body 161 are integrally formed, or may include that the supporting block 163 and the plate body 161 are connected and fixed to each other by using an intermediate connecting member. When the supporting block 163 and the plate body 161 are integrally formed in this example, the supporting block 163 and the plate body 161 can be formed by processing using the same mold, thus reducing the processing flow of the exhaust structure 160 and further improving the processing efficiency of the exhaust structure 160. When the supporting block 163 and the plate body 161 are fixed to each other to form an integrated structure by using an intermediate connecting member in this example, the intermediate connecting member is connected to both the supporting block 163 and the plate body 161, such that the support 163 and the plate body 161 are indirectly connected to each other, and thus the supporting block 163 and the plate body 161 are supported and limited by each other, thereby improving their structural strength.

In some embodiments, the supporting block 163 and the plate body 161 may be integrally formed by injection molding, such that the processing efficiency is high.

Referring to FIG. 18 to FIG. 22, in some examples, the plate body 161 includes a second surface 161a opposite to the first surface 161b in the thickness direction of the plate body 161, and a recess 166 is formed on the second surface 161a at a position corresponding to the supporting block 163.

In this example, the first surface 161b and the second surface 161a are two opposite surfaces of the plate body 161 in the thickness direction, and the first surface 161b may be parallel to the second surface 161a or may be not parallel to the second surface 161a.

The position of the recess 166 corresponding to the position of the supporting block 163 means that when the recess 166 and the supporting block 163 are projected on a plane parallel to the second surface 161a, the projections of the recess 166 and the supporting block 163 at least partially coincide. The recess 166 is a concave portion formed on the second surface 161a. The concave portion forms a space recessed into the plate body 161 on the second surface 161a, such that the airflow on the side where the second surface 161a is located can flow along the space formed by the concave portion, and thereby the flow area of the airflow can be increased, thus improving the flow performance of airflow in the battery cell 110. Because the position of the recess 166 corresponds to that of the supporting block 163, in the thickness direction of the plate body 161, the supporting block 163 can support the position of the plate body 161 where the recess 166 is disposed and thus can mitigate the problem that the structural strength of the plate body 161 is reduced due to the presence of the recess 166, such that the overall compression resistance of the plate body 161 is improved, and the possibility of deformation of the exhaust structure 160 is reduced on the premise that the exhaust structure 160 is allowed to have better exhaust performance.

In this example, the shape and size of the recess 166 may be identical to those of the supporting block 163 at the corresponding position, and the shape and size of the recess 166 may be different from those of the supporting block 163 at the corresponding position. The depth, size, and position of the recess 166 may be determined according to the overall shape of the plate body 161.

In some examples, the recess 166 extends to the edge of the plate body 161.

The recess 166 extending to the edge of the plate body 161 means that the recess 166 has an opening formed at the edge of the plate body 161 to enable the recess 166 to be in communication with the outer side of the edge of the plate body 161, such that the airflow at the outer side of the edge of the plate body 161 can flow along the channel formed by the recess 166; the airflow on the side where the second surface 161a of the plate body 161 is located may also flow toward the edge of the plate body 161 along the recess 166, thus increasing the flowing space of airflow and improving the flow performance of airflow in the battery cell 110.

In this example, the recess 166 extending to the edge of the plate body 161 may be the recess 166 extends to at least one of the edge in the width direction and the edge in the length direction of the plate body 161; optionally, the recess 166 may also be in communication with both the edge in the width direction and the edge in the length direction of the plate body 161, such that the airflows at the edge in the width direction and the edge in the length direction of the plate body 161 can flow relative to each other.

In this example, optionally, the housing 120 further includes the second wall 122 described in any one of the above examples, and the second gap 161c described in any one of the above examples is formed between the edges in the width direction and the length direction of the plate body 161 and the second wall 122. By allowing the recess 166 to be in communication with the edges of the plate body 161, the airflow in the recess 166 may be made to flow toward the second gap 161c, such that the airflow at the side where the second surface 161a of the plate body 161 is located flows to a preset position after sequentially passing through the recess 166, the second gap 161c, and the fluid channel 164.

In this example, optionally, the plate body 161 is provided with the via 162 described in any one of the above examples, the fluid channel 164 is disposed on the first surface 161b of the plate body 161, one end of the via 162 is in communication with the recess 166, and the other end of the via 162 is in communication with the fluid channel 164, such that the airflow on the side where the second surface 161a is located may flow toward a preset position sequentially along the recess 166, the via 162, and the fluid channel 164 in sequence.

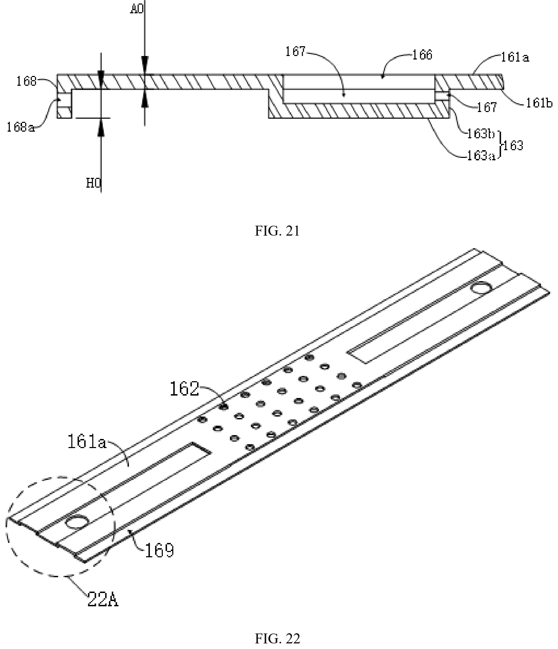

Referring to FIG. 18 and FIG. 21, in some examples, the supporting block 163 includes a bottom wall 163a and a side wall 163b. The bottom wall 163a abuts against the first wall 121, the side wall 163b is provided with a first hollow-through hole 167, and the first hollow-through hole 167 is in communication with the recess 166.

The side wall 163b of the supporting block 163 is connected to the plate body 161, and the bottom wall 163a of the supporting block 163 is disposed opposite to the plate body 161. The bottom wall 163a of the supporting block 163 abuts against the first wall 121, thus supporting the plate body 161 by the first wall 121 and the supporting block 163.

In this example, the bottom wall 163a abuts against the first wall 121, the wall surface between the bottom wall 163a and the plate body 161 may be a side wall 163b, and the side wall 163b may be a wall surface in the length direction of the supporting block 163 or a wall surface in the width direction of the supporting block 163.

The first hollow-through hole 167 is a through hole penetrating through the side wall 163b, one end of the first hollow-through hole 167 is in communication with the recess 166, and the other end of the first hollow-through hole 167 may be indirectly in communication with the fluid channel 164 formed at the outer periphery of the supporting block 163. Since the recess 166 may form a space for the flowing of airflow, the first hollow-through hole 167 in this example may be used for the airflow in the recess 166 to flow toward the fluid channel 164, thereby increasing the flow space of airflow to improve the flowing efficiency of airflow in the battery cell 110. Since the recess 166 is disposed on the second surface 161a of the plate body 161, when the temperature of the end of the electrode assembly 130 close to the plate body 161 increases, the high-temperature gas at the first end of the electrode assembly 130 close to the plate body 161 can be guided to a preset position along with the flowing of airflow on the second surface 161a, and thus the temperature of the end of the electrode assembly 130 close to the plate body 161 can be reduced by the flowing of airflow. With the decrease in the temperature of the side of the plate body 161 where the second surface 161a is located, the possibility of deformation at the side of the plate body 161 where the second surface 161a is located can be reduced.

In this example, the side wall 163b may be disposed perpendicular to the first surface 161b of the plate body 161, and the side wall 163b may also be disposed at an included angle to the first surface 161b of the plate body 161. The first hollow-through hole 167 may be disposed parallel to the first surface 161b of the plate body 161, and the first hollow-through hole 167 may also be disposed at an included angle to the first surface 161b. In this example, the first hollow-through hole 167 may be a straight hole or may also be of a through hole structure such as a tapered hole.

In this example, the bottom wall 163a directly abuts against the first wall 121, or may indirectly abut against the first wall 121 through another member, such as the insulating sheet 152, such that the first wall 121 can support the bottom wall 163a.

In some examples, the first wall 121 is provided with a pressure relief mechanism 140, and the first hollow-through hole 167 allows the recess 166 to be in communication with the pressure relief mechanism 140.

The pressure relief mechanism 140 is used for relieving the pressure when the pressure in the battery cell 110 reaches a preset value. In this example, the pressure relief mechanism 140 may be an explosion-proof valve or other structures capable of relieving pressure when the internal air pressure of the battery cell 110 reaches a preset value.

The first hollow-through hole 167 is in communication with the recess 166 and the pressure relief mechanism 140, such that the airflow on the side of the plate body 161 where the second surface 161a is located can flow toward the pressure relief mechanism 140 sequentially along the recess 166 and the first hollow-through hole 167. Optionally, in this example, the recess 166 is in communication with at least one of the edges in the length and width directions of the plate body 161, such that the airflow at the edges of the plate body 161 can flow toward the pressure relief mechanism 140 along the recess 166 and the first hollow-through hole 167. Further optionally, the first hollow-through hole 167 is in communication with the fluid channel 164, and the fluid channel 164 is in communication with the pressure relief mechanism 140, such that the airflow in the battery cell 110 can flow toward the pressure relief mechanism 140.

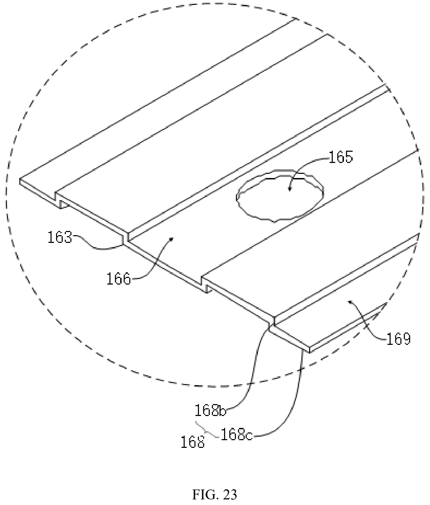

Referring to FIG. 18 and FIGs. 21-23, in some examples, the supporting block 163 includes an edge supporting block 168, and the edge supporting block 168 is disposed at the edge of the plate body 161.

The edge supporting block 168 may be located at the edge of the plate body 161 in the length direction, and the edge supporting block 168 may also be located at the edge of the plate body 161 in the width direction. By providing the edge supporting block 168, the edge of the plate body 161 can be supported to reduce the possibility of warping, bending, or breaking at the edge of the plate body 161, thereby improving the structural strength at the edge of the plate body 161.

In this example, the shape and size of the edge supporting block 168 may be identical to the shape and size of the supporting block 163 described in any one of the above examples, and the shape and size of the edge supporting block 168 may also be determined according to the shape and size of the plate body 161, thus enabling the edge supporting block 168 to have a relatively good supporting effect on the plate body 161. Optionally, the edge of the plate body 161 is bent toward the surface to form an edge supporting block 168. The edge supporting block 168 may be perpendicular to the first surface 161b of the plate body 161, and the edge supporting block 168 may also be disposed at an included angle to the first surface 161b of the plate body 161.

In some examples, referring to FIG. 22, a recess 166 is formed on the second surface 161a at a position corresponding to the edge supporting block 168, and the recess 166 extends at least to the edge of the plate body 161 in the width direction.

In this example, the recess 166 is disposed at a position of the second surface 161a close to the edge of the plate body 161, and the recess 166 also corresponds to the position of the edge supporting block 168, such that the airflow at a position of the plate body 161 corresponding to the edge supporting block 168 can flow along the recess 166, and thereby the flow performance of airflow at the edge of the plate body 161 can be improved.

In this example, the recess 166 extends to the edge of the plate body 161 in the width direction, such that the airflow at the edge of the plate body 161 in the width direction flows toward a preset position along the recess 166.

The recess 166 may also extend to the edge of the plate body 161 in the length direction.

Referring to FIG. 21, in some examples, the edge supporting block 168 is provided with a second hollow-through hole 168a, and the second hollow-through hole 168a penetrates through the edge supporting block 168 along a direction intersecting with the thickness direction of the first wall 121.

The second hollow-through hole 168a is a through hole penetrating through the edge supporting block 168 and is used for being in communication with the recess 166 corresponding to the position of the edge supporting block 168, such that the airflow at a position corresponding to the edge supporting block 168 can flow to a preset position along the second hollow-through hole 168a.

In some examples, the edge of the plate body 161 is bent toward the first surface 161b to form an edge supporting block 168, and the edge supporting block 168 includes a first supporting portion 168b and a second supporting portion 168c connected to the first supporting portion 168b, where the first supporting portion 168b is connected to the plate body 161, and the second supporting portion 168c is connected to an end of the first supporting portion 168b distal to the plate body 161. Further optionally, the first supporting portion 168b is provided with a second hollow-through hole 168a. The second hollow-through hole 168a on the first supporting portion 168b may correspond to the position of the pressure relief mechanism 140.

In this example, by providing the second hollow-through hole 168a, an airflow passage can be formed at the edge of the plate body 161 to improve the airflow efficiency at the edge part of the plate body 161.

In this example, the extending direction of the second hollow-through hole 168a intersects with the thickness direction of the first wall 121, that is, the extending direction of the second hollow-through hole 168a is not parallel to the thickness direction of the first wall 121. Optionally, the extending direction of the second hollow-through hole 168a is perpendicular to the thickness direction of the first wall 121.

Further, in some examples, an airflow channel is formed at the outer periphery of the edge supporting block 168, and the second hollow-through hole 168a is in communication with the airflow channel, such that the airflow at the side of the plate body 161 where the second surface 161a is located may flow toward a preset position sequentially along the recess 166, the second hollow-through hole 168a, and the airflow channel.

In some examples, the first wall 121 is provided with a pressure relief mechanism 140, and the second hollow-through hole 168a is disposed opposite to the pressure relief mechanism 140.

The second hollow-through hole 168a being disposed opposite to the pressure relief mechanism 140 may be that the second hollow-through hole 168a is disposed opposite to the pressure relief mechanism 140 in the width direction of the first wall.

In this example, the second hollow-through hole 168a is disposed opposite to the pressure relief mechanism 140, such that the airflow can flow toward the pressure relief mechanism 140 through the second hollow-through hole 168a.

Further optionally, an airflow channel is formed at the outer periphery of the edge supporting block 168, and the second hollow-through hole 168a is in communication with the airflow channel, such that the airflow at the side of the plate body 161 where the second surface 161a is located may flow toward the pressure relief mechanism 140 sequentially along the recess 166, the second hollow-through hole 168a, and the airflow channel, thus improving the flow performance of air in the battery cell 110 and thereby enabling the battery cell 110 to have pressure relieved when necessary to improve the reliability of the battery cell 110.

In some examples, referring to FIG. 24, the supporting block 163 is provided independently from the plate body 161, and the supporting block 163 is fixed to the plate body 161.

The supporting block 163 being provided independently from the plate body 161 means that the supporting block 163 and the plate body 161 may be formed separately. The supporting block 163 being fixed to the plate body 161 means that the supporting block 163 is directly connected to the plate body 161 or the supporting block 163 and the plate body 161 are connected and fixed to each other through an intermediate connecting member.

In this example, by allowing the supporting block 163 and the plate body 161 to be independently provided, the independent shaping of the supporting block 163 and the plate body 161 can be facilitated, thus simplifying the shaping process of the supporting block 163 and the plate body 161; by fixing the supporting block 163 to the plate body 161, the supporting block 163 can not remove relative to the plate body 161, such that the supporting block 163 can support the plate body 161 according to a preset mode, and thereby the plate body 161 can keep the preset structural stability, thus reducing the possibility of deformation of the plate body 161.

In another aspect, allowing to be provided independently may satisfy different requirements. For example, a thinner plate body 161 or a thicker supporting block 163 may be manufactured.

Referring to FIG. 24, in some examples, the edge of the supporting block 163 is at a preset distance from the edge of the plate body 161.

In this example, the supporting block 163 being at a preset distance from the edge of the plate body 161 means that when the supporting block 163 and the plate body 161 are projected on a plane parallel to the first surface 161b of the plate body 161, a gap is present between the edge of the supporting block 163 and the corresponding edge of the plate body 161, such that the edge of the supporting block 163 is at a preset distance from the edge of the plate body 161.

In this example, by forming a preset distance between the edge of the supporting block 163 and the edge of the plate body 161, the fluid channel 164 may be formed through the gap between the edge of the supporting block 163 and the edge of the plate body 161 to allow the airflow to flow, and thus the flow performance of airflow at the edge of the exhaust structure 160 can be improved.

In this example, the specific width of the preset distance between the edge of the supporting block 163 and the edge of the plate body 161 may be determined according to the specific size, shape and relative position of the plate body 161 and the supporting block 163. When a plurality of rows and columns of the supporting blocks 163 are disposed on the plate body 161, the supporting blocks 163 and the plate body 161 are projected on a plane parallel to the first surface 161b, the gap between the edge of the supporting block 163 and the edge of the plate body 161 refers to a gap formed between the supporting block 163 and the adjacent edge of the plate body 161, and the edge of the plate body 161 may be the edge of the plate body 161 in the width direction or the edge of the plate body 161 in the length direction.

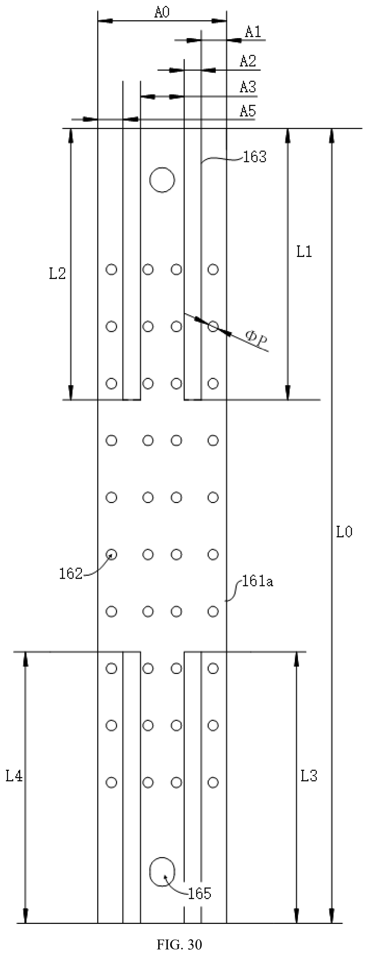

Referring to FIG. 30, in some examples, in the width direction of the plate body 161, the edge of the supporting block 163 is at a preset distance from the edge of the plate body 161.

The edge of the supporting block 163 being at a preset distance from the edge of the plate body 161 in the width direction of the plate body 161 means that when the plate body 161 and the supporting block 163 are projected on a plane parallel to the first surface 161b of the plate body 161, a gap is present between the edge of the supporting block 163 and the edge of the plate body 161 on the corresponding side, and the gap can be used for forming an airflow channel for the airflow to flow toward a preset position along the edge of the plate body 161 in the width direction, thereby improving the flow performance of airflow in the battery cell 110.

In this example, in the width direction of the plate body 161, the size of the distance between the edge of the supporting block 163 and the edge of the plate body 161 on the corresponding side may be determined according to the specific conditions of the plate body 161 and the supporting block 163.

Referring to FIG. 4 and FIG. 30, the supporting block 163 has a shape of a long strip, the length direction of the supporting block 163 may be parallel to the length direction of the plate body, the length of the plate body is L0, and the length of the supporting block 163 is L1. In this example, L1 is not smaller than 0.25L0, and the length of the first wall 121 is L; in this example, the width of the plate body 161 is A0, where L0 ≤ L; the width of the plate body 161 is not greater than the width of the first wall 121, such that the plate body 161 can serve as a barrier between the first wall 121 and the electrode assembly 130. In this example, when the length L1 of the supporting block 163 is too small, the too small length of the supporting block 163 may easily cause stress concentration on the plate body 161, thereby reducing the structural strength of the exhaust structure 160, such that the plate body 161 is easily deformed when the exhaust structure 160 supports the electrode assembly 130.

For example, L1 may be 0.3L0, 0.4L0, 0.5L0, 0.6L0, 0.7L0, 0.8L0, 0.9L0, or L0. Optionally, in this example, the length L1 of the supporting block 163 is not smaller than 0.3L0.

Optionally, the length L1 of the supporting block 163 is not greater than 0.4L0 to reduce the occupancy of the flow channel.

In some embodiments, the length direction of the supporting block 163 is parallel to the length direction of the plate body.

Further optionally, the first wall 121 is provided with the pressure relief mechanism 140 described in any one of the above examples, and in this example, the supporting block 163 and the pressure relief mechanism 140 are disposed in a staggered manner, such that the supporting block 163 does not occupy the space of the pressure relief mechanism 140, thus reducing the possibility that the supporting block 163 presses the pressure relief mechanism 140.

Optionally, four supporting blocks 163 are disposed on the side of the plate body 161 where the first surface 161b is located. The lengths of the four supporting blocks 163 are L1, L2, L3, and L4, respectively; the lengths of the four supporting blocks 163 may be equal, and the lengths of the four supporting blocks 163 may also be unequal. The four supporting blocks 163 may be disposed in two rows and two columns on the plate body 161, and the four supporting blocks 163 and the pressure relief structure are disposed in a staggered manner. Further optionally, two supporting blocks 163 are disposed at two ends of the plate body 161 in the length direction to reduce the possibility of deformation of the edges of the plate body 161 in the length direction and, at the same time, to have a supporting effect on the electrode assembly 130 to reduce the deformation of the edges of the electrode assembly 130.

In some examples, referring to FIG. 30, the width of the plate body 161 is A0, and in the width direction of the plate body 161, the total width of the supporting blocks 163 is not smaller than 0.2A0 and not greater than 0.8A0.

For example, the total width of the supporting blocks 163 is 0.2A0, 0.3A0, 0.4A0, 0.5A0, 0.6A0, 0.7A0, or 0.8A0.

When the total width of the supporting blocks 163 is too small, the contact surface between the plate body 161 and the supporting block 163 is easily made too narrow, and thus the plate body 161 is easily deformed due to stress concentration; when the total width of the supporting blocks 163 is too large, the width of the fluid channel 164 formed at the outer periphery of the supporting block 163 is relatively reduced, and thus the exhaust performance of the exhaust structure 160 may be reduced. Further optionally, in this example, the total width of the supporting blocks 163 is not smaller than 0.3A0 and not greater than 0.6A0.

When there is one supporting block 163 along the width direction of the plate body 161, the total width of the supporting block 163 is the width of the supporting block 163.

Referring to FIG. 30, in some examples, there is a plurality of supporting blocks 163, and the plurality of supporting blocks 163 are spaced apart from each other along the width direction of the plate body 161. In this example, the total width of the supporting blocks 163 is not smaller than 0.2A0 and not greater than 0.8A0, and in this example, the total width of the supporting blocks 163 may be 0.2A0, 0.5A0, 0.6A0, 0.8A0, or any other value within the above interval. Further, the total width of the supporting blocks 163 is not smaller than 0.3A0 and not greater than 0.6A0. In this example, the total width of the supporting blocks 163 is the sum of the widths of a plurality of supporting blocks 163 in the width direction of the plate body 161. Taking the case where there are two supporting blocks 163 as an example, the widths of the supporting blocks 163 may both be A2, and the total width of the supporting blocks 163 is 2A2. Optionally, in this example, the widths of the plurality of supporting blocks 163 may also be unequal.

Optionally, the distance between two supporting blocks 163 is A3, the distance between the edge of one of the supporting blocks 163 and the edge of the corresponding side of the plate body 161 is A1, and the distance between the edge of the other supporting block 163 and the edge of the corresponding side of the plate body 161 is A5.

Referring to FIG. 31, in some examples, the supporting block 163 is in hot-melting connection to the plate body 161.

In this example, the supporting blocks 163 are connected to the plate body 161 by hot melting, such that the supporting blocks 163 and the plate body 161 can be connected quickly, and the supporting blocks 163 and the plate body 161 form an integrated structure by using the weld marks 170 formed by hot melting, which can help to improve the structural strength of the exhaust structure 160.

In this example, the entire end surface of the supporting block 163 facing the plate body 161 may be in hot-melting connection to the corresponding position of the plate body 161, or a plurality of portions on the end surface of the supporting block 163 facing the plate body 161 may be selected for welding to form a plurality of weld marks 170.

In some examples, a plurality of supporting blocks 163 are provided, and a plurality of weld marks 170 are formed on each supporting block 163 and the plate body 161.

In this example, by connecting the supporting block 163 to the plate body 161 by using a plurality of weld marks 170, the connection parts between the supporting block 163 and the plate body 161 are relatively dispersed. When the welding and hot melting is performed, the positions of the welding spots of the supporting block 163 and the plate body 161 are dispersed, thus reducing the problem that the local temperature of the supporting block 163 and the plate body 161 is too high due to the excessively concentrated welding spots, and thereby reducing the occurrence of melting through and deformation of the plate body 161 and the supporting block 163. In this example, the plurality of weld marks 170 may be spaced apart from each other along the length direction of the supporting block 163 to improve the structural strength of the connection parts between the supporting block 163 and the plate body 161 and to sufficiently utilize the space in the length direction of the supporting block 163.

In some examples, the weld marks 170 of the supporting block 163 resulting from hot melting are exposed to the surface of the plate body 161 away from the supporting block 163 to completely weld an end part of the supporting block 163, by hot melting, to the plate body 161, thus increasing the contact area between the supporting block 163 with the plate body 161 and improving the connection strength between the supporting block 163 and the plate body 161. In this example, when the supporting block 163 is disposed at the side of the plate body 161 where the first surface 161b is located, the weld marks 170 of the supporting block 163 resulting from hot melting are exposed at the side of the plate body 161 where the second surface 161a is located.

In some examples, the thickness of the plate body 161 is smaller than the thickness of the supporting block 163 to reduce the overall thickness of the exhaust structure 160, and by reducing the overall thickness of the exhaust structure 160, the occupied space of the exhaust structure 160 inside the battery cell 110 may be reduced, thus facilitating the increase in the energy density of the battery cell 110.

In this example, the thickness of the plate body 161 is smaller than the thickness of the supporting block 163, such that the hot melting can be performed on the side where the plate body 161 with smaller thickness is located, and since the thickness of the plate body 161 is small, the power of the device required by hot melting is reduced, thus helping to reduce the processing cost.

Referring to FIG. 21, in this example, the thicknesses of the plate body 161 and the supporting block 163 may be selected according to a specific situation, and the thickness of the supporting block 163 in this example may be equal to the depth of the fluid channel 164 described in any one of the above examples. Optionally, the thickness of the plate body 161 is H. H is not smaller than 0.05 mm and not greater than 1.0 mm in the thickness direction of the plate body 161. In some examples, H is not smaller than 0.2 mm and not greater than 0.4 mm. The thickness H0 of the supporting block 163 may be the depth H0 of the fluid channel. In some examples, the thickness H0 of the supporting block 163 is not smaller than 0.1 mm and not greater than 5 mm; further optionally, in some examples, H0 is not smaller than 0.2 mm and not greater than 0.8 mm.

Referring to FIG. 3, in some examples, the battery cell 110 further includes a pressure relief mechanism 140. The pressure relief mechanism 140 is disposed on the first wall 121, and the fluid channel 164 is used for allowing the airflow in the inner cavity to flow toward the pressure relief mechanism 140.

In this example, the pressure relief mechanism 140 is used for relieving pressure outwards when the air pressure inside the battery cell 110 reaches a preset value, and the pressure relief mechanism 140 may be an explosion-proof valve. The pressure relief mechanism 140 is installed on the first wall 121, such that the battery cell 110 can be relieved of pressure through one side of the first wall 121.

The pressure relief mechanism 140 and the first wall 121 may be of an integrated structure or a split-type structure. When the pressure relief mechanism 140 and the first wall 121 are of an integrated structure, the pressure relief mechanism 140 may be a thickness-reduced area on the first wall 121 or an indentation formed in the first wall 121. When the pressure relief mechanism 140 and the first wall 121 are of a split-type structure, a hole is formed on the first wall 121, and the pressure relief mechanism 140 is connected to the first wall 121 by welding or the like and covers the hole.

In this example, the exhaust structure 160 is disposed between the first wall 121 and the electrode assembly 130, the exhaust structure 160 is provided with a fluid channel 164, and a space for the flowing of airflow is formed through the fluid channel 164, such that the gas can flow toward the pressure relief mechanism 140 along the fluid channel 164, and thereby the battery cell 110 can be relieved of pressure in time when necessary.

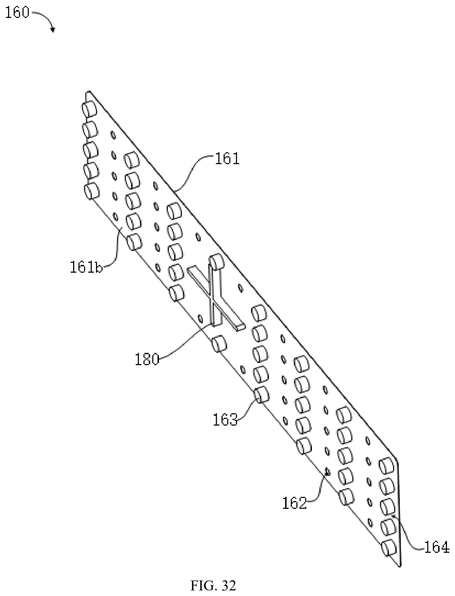

Referring to FIG. 4, FIG. 32, and FIG. 33, in some examples, the exhaust structure 160 includes a plate body 161 and a supporting block 163. The supporting block 163 is disposed on a side of the plate body 161 facing the first wall 121, a fluid channel 164 is formed around the supporting block 163, and the projection of the supporting block 163 on the first wall 121 does not coincide with the pressure relief mechanism 140.

In this example, the plate body 161 is the main structure of the exhaust structure 160, and the plate body 161 serves as a barrier between the first wall 121 and the electrode assembly 130; the plate body 161 has a first surface 161b facing the first wall 121 and a second surface 161a facing the electrode assembly 130, and the supporting block 163 is disposed at a side of the plate body 161 where the first surface 161b is located. The supporting block 163 may be provided integrally with the plate body 161, or the supporting block 163 may be provided independently from the plate body 161. When the supporting block 163 is provided independently from the plate body 161, the supporting block 163 may be connected and fixed to the plate body 161, or may not be connected and fixed to the plate body 161.

The projection of the supporting block 163 on the first wall 121 not coinciding with the pressure relief mechanism 140 means that the projection of the supporting block 163 on the first wall 121 and the pressure relief mechanism 140 are present in a staggered manner to reduce the pressing of the supporting block 163 on the pressure relief mechanism 140.

The supporting block 163 suspends the plate body 161 above the side of the first wall 121 facing the electrode assembly 130, and a fluid channel 164 is formed around the supporting block 163 to allow the gas to flow between the plate body 161 and the first wall 121. Because the first wall 121 is provided with the pressure relief mechanism 140, when the internal air pressure of the battery cell 110 reaches a preset value, the airflow can flow toward the pressure relief mechanism through the fluid channel 164, such that the battery cell 110 can be relieved of pressure in time, thus improving the reliability of the battery cell 110.

In this example, there may be one supporting block 163, and the fluid channel 164 is formed at the periphery of the supporting block 163; in this example, there may be a plurality of supporting blocks 163, and the fluid channel 164 may be formed between adjacent supporting blocks 163.

Referring to FIG. 4, FIG. 32, and FIG. 33, in some examples, the plate body 161 is provided with a reinforcing rib 180 at a position corresponding to the pressure relief mechanism 140.

The plate body 161 being provided with a reinforcing rib 180 at a position corresponding to the pressure relief mechanism 140 means that when the plate body 161 is projected on the first wall 121, the reinforcing rib 180 at least partially coincides with the pressure relief mechanism 140. In this example, the reinforcing rib 180 may be a rib protruding from at least one of the first surface 161b and the second surface 161a of the plate body 161, and the reinforcing rib 180 may have a cross shape or other shapes. In this example, by providing the reinforcing rib 180, the structural strength of the plate body 161 at the position corresponding to the pressure relief mechanism 140 can be increased by the reinforcing rib 180, and thereby the deformation resistance of the plate body 161 can be increased.

Referring to FIG. 4, FIG. 32, and FIG. 33, in some examples, the reinforcing rib 180 is disposed on a side of the plate body 161 facing the first wall 121.

In this example, the reinforcing rib 180 is disposed on the first surface 161b of the plate body 161. The second surface 161a of the plate body 161 faces the electrode assembly 130, and the reinforcing rib 180 is used for reinforcing the plate body 161. Meanwhile, the reinforcing rib 180 is disposed away from the electrode assembly 130, such that the reinforcing rib 180 does not apply force to the electrode assembly 130, thereby reducing damage to the electrode assembly 130 due to the pressing of the electrode assembly 130 by the reinforcing ribs 180.

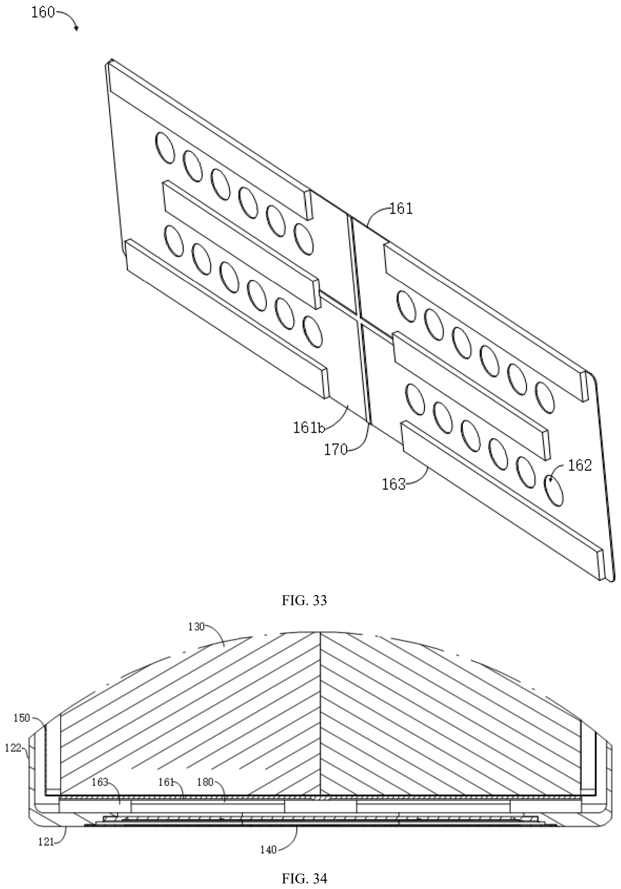

Referring to FIG. 33, in some examples, the reinforcing rib 180 extends to the edges of the plate body 161, such that the reinforcing rib 180 can reinforce the edges of the plate body 161. In this example, the reinforcing rib 180 may extend to the edges of the plate body 161 in the width direction, and the reinforcing rib 180 may also extend to the edges of the plate body 161 in the length direction.

Still referring to FIG. 33, in some examples, the reinforcing rib 180 extends to the adjacent supporting block 163, such that the reinforcing rib 180 and the adjacent supporting block 163 can form an integrated structure, and thereby the reinforcing rib 180 and the supporting block 163 can have a mutual supporting effect, thus improving the overall strength of the exhaust structure 160.

In some examples, the reinforcing rib 180 extends to the edges of the plate body 161, and the reinforcing rib 180 extends to the adjacent supporting block 163. This improves the overall structural strength of the exhaust structure 160, and this also makes it convenient to integrally form the reinforcing rib 180, the supporting block 163, and the plate body 161 when they are shaped, thereby simplifying the shaping equipment and the shaping process of the exhaust structure 160. Optionally, in this example, in the length direction of the plate body 161, the supporting blocks 163 are located at both sides of the reinforcing rib 180, the portions of the reinforcing rib 180 extending in the length direction of the plate body 161 may extend to the supporting blocks 163 at both sides thereof, and the extending portions of the reinforcing rib 180 in the width direction of the plate body 161 may extend to the edges of the plate body 161 in the width direction.

Referring to FIG. 34, in some examples, in the thickness direction of the first wall 121, the height of the reinforcing rib 180 is smaller than the height of the supporting block 163, such that the reinforcing rib 180 is not in contact with the first wall 121 in a normal state of the exhaust structure 160. Because the reinforcing rib 180 is disposed corresponding to the pressure relief mechanism 140 and the supporting block 163 may abut against the first wall 121, when the height of the reinforcing rib 180 is smaller than the height of the supporting block 163, the reinforcing rib 180 does not press the pressure relief mechanism 140, thus reducing the falling off of the pressure relief mechanism 140 caused by the acting force applied by the reinforcing rib 180 on the pressure relief mechanism 140.

In some examples, the reinforcing rib 180 is provided integrally with the plate body 161, such that the reinforcing rib 180 can be integrally formed with the plate body 161, thereby improving the processability of the exhaust structure 160. By adopting the integral arrangement, the connection strength of the connection part between the reinforcing rib 180 and the plate body 161 can be improved, and meanwhile the structural strength of the exhaust structure 160 can be improved.

In some examples, the reinforcing rib 180 is provided independently from the plate body 161 and connected thereto. In this example, the reinforcing rib 180 and the plate body 161 may be separately shaped, and the reinforcing rib 180 and the plate body 161 may be connected and fixed to each other. The reinforcing rib 180 and the plate body 161 may be connected in a welding and snap-fit manner, and the reinforcing rib 180 and the plate body 161 may be connected and fixed to each other by an intermediate connecting member. The intermediate connecting member includes a bolt, an inserted pin, and the like, and other structures capable of connecting and fixing the reinforcing rib 180 and the plate body 161 to each other may also be used as the intermediate connecting member.

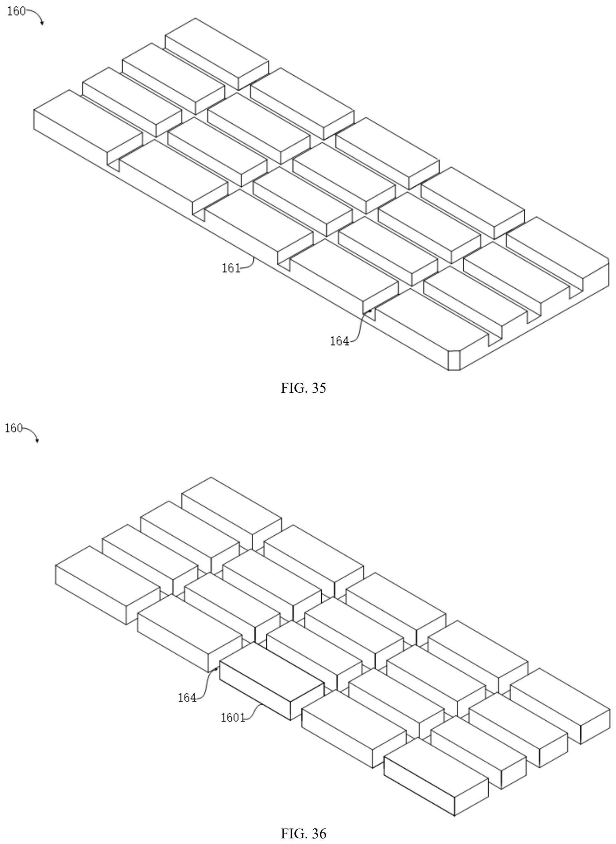

Referring to FIG. 35, in some examples, the exhaust structure 160 includes a plate body 161. The plate body 161 includes a first surface 161b disposed along the thickness direction of the plate body 161, and the fluid channel 164 is a groove 169 disposed on the first surface 161b.

In this example, the fluid channel 164 may be one or more grooves 169 recessed in the first surface 161b, and the fluid channel 164 is used for forming a space for the flowing of airflow on the side of the exhaust structure 160 where the first surface 161b is located. In this example, the fluid channel 164 may be in communication with the edge of the plate body 161 in a first direction. The first direction is disposed at an included angle to the thickness direction of the first wall 121; optionally, the first direction is disposed perpendicular to the thickness direction of the first wall 121.

In this example, by forming the fluid channel 164 using the groove 169, the processing and shaping of the fluid channel 164 may be facilitated to enhance the processability of the exhaust structure 160. Further optionally, in some examples, the plate body 161 also has a second surface 161a disposed opposite to the first surface 161b, a via 162 is formed on the plate body 161, the via 162 is disposed along the thickness direction of the plate body 161, and the via 162 is used for allowing the second surface 161a of the plate body 161 to be in communication with the fluid channel 164, such that the airflow on the side of the plate body 161 where the second surface 161a is located can flow toward the side where the first surface 161b is located.

Referring to FIG. 36, in some examples, the exhaust structure 160 includes a plurality of sub-exhaust structures 1601 spaced apart from each other, and a fluid channel 164 is formed between adjacent sub-exhaust structures 1601.

In this example, the plurality of sub-exhaust structures 1601 are arranged and combined to form the exhaust structure 160, where the plurality of sub-exhaust structures 1601 may be the same in shape and size, and the plurality of sub-exhaust structures 1601 may also be different in shape and size. A fluid channel 164 may be formed between adjacent sub-exhaust structures 1601 to allow for the flowing of airflow. In this example, by combining the plurality of sub-exhaust structures 1601 to form the exhaust structure 160, in one aspect, the formation of the exhaust structure 160 can be facilitated by splicing and combining according to the specific shape and size of the battery cell 110, and in another aspect, the plurality of the sub-exhaust structures 1601 may be separately formed to improve the processability of the sub-exhaust structures 1601.

In this example, the plurality of sub-exhaust structures 1601 may be provided independently from each other, or the plurality of sub-exhaust structures 1601 may be connected and fixed to each other by a connecting member.

In some examples, the battery cell 110 further includes an insulating film 150. The insulating film 150 is wrapped outside the electrode assembly 130, and the insulating film 150 is connected to the sub-exhaust structures 1601.

The insulating film 150 serves to separate the electrode assembly 130 from the housing 120 to reduce the contact of the electrode assembly 130 with the housing 120. The insulating film 150 is connected to the sub-exhaust structures 1601 to limit the sub-exhaust structure 1601, such that the sub-exhaust structures 1601 can be fixed at a preset position.

In this example, the insulating film 150 may be connected and fixed to the sub-exhaust structures 1601 by hot melting or other means.

Referring to FIG. 3, FIG. 6, and FIG. 14, in some examples, the housing 120 includes a second wall 122, the second wall 122 includes a second sub-wall 122a, and the second sub-wall 122a is provided with an electrode terminal 122b.

In this example, the second wall 122 is any wall surface of the housing 120 other than the first wall 121. The second sub-wall 122a is a part of the wall surface of the second wall 122, the second sub-wall 122a may be a wall surface disposed opposite to the first wall 121, and the second sub-wall 122a may also be a wall surface disposed adjacent to the first wall 121. Taking the case where the first wall 121 is the bottom wall 163a of the housing 120 as an example, the second wall 122 may be the side wall of the housing 120 or the top wall of the housing 120.

In this example, the electrode terminal 122b is used for being electrically connected to the electrode assembly 130 and may be used for charging and discharging the battery cell 110. By disposing the electrode terminal 122b on the second sub-wall 122a, the electrode terminal 122b and the pressure relief mechanism 140 can be present in a staggered manner, thereby reducing mutual interference between the electrode terminal 122b and the pressure relief mechanism 140. Optionally, in this example, the electrode terminal 122b may be connected to the tab 131 through a current collecting member 133.

In some examples, the second sub-wall 122a is opposite to the first wall 121, and the electrode terminal 122b and the pressure relief mechanism 140 are respectively located on two opposite wall surfaces of the housing 120, such that the electrode terminal 122b and the pressure relief mechanism 140 are completely staggered to reduce mutual interference therebetween. In this example, the second sub-wall 122a and the first wall 121 may be the upper wall surface and the lower wall surface of the housing 120, respectively, and the second sub-wall 122a and the first wall 121 may also be other wall surfaces of the housing 120, respectively.

In some examples, the second sub-wall 122a is connected to the first wall 121, the second sub-wall 122a is disposed adjacent to the first wall 121, and the electrode terminal 122b disposed on the second sub-wall 122a and the pressure relief mechanism 140 disposed on the first wall 121 face different directions of the battery cell 110, thus reducing mutual interference between the electrode terminal 122b and the pressure relief mechanism 140.

In some examples, the electrode assembly 130 includes a tab 131, and the tab 131 faces the second sub-wall 122a. In this example, the tab 131 is used for being connected to the electrode terminal 122b to charge and discharge the battery cell 110.

Since the second sub-wall 122a and the first wall 121 are disposed in a staggered manner, the mutual interference between the tab 131 and the pressure relief mechanism 140 can be reduced, and the tab 131 can also be connected to the electrode terminal 122b in the vicinity.

In some examples, the second sub-wall 122a is an end cover. In this example, the installation of the electrode terminal 122b can be facilitated by using the second sub-wall 122a as an end cover. The end cover may be the top wall or the side wall of the battery cell 110. Two end covers may be provided, and the two end covers are respectively provided with a positive electrode terminal and a negative electrode terminal, as shown in FIG. 6. One end cover may be provided, and the positive electrode terminal and the negative electrode terminal may be disposed on one end cover, as shown in FIG. 3.

The present application provides an example of a battery 100 base on the battery cell 110 described above. The battery 100 includes the battery cell 110 described in any one of the above examples.

In this example, the battery 100 may include a case 190, and the battery cell 110 is installed within the case 190. The battery 100 may include one battery cell 110 described above, and the battery 100 may also include a plurality of battery cells 110. When the battery 100 is provided with a plurality of battery cells 110, the plurality of battery cells 110 may be arranged according to a preset rule. The plurality of battery cells 110 may be arranged in one row and a plurality of columns or in a plurality of rows and a plurality of columns. The plurality of battery cells 110 may be connected in series, in parallel, or in series-parallel.

It can be understood that only the battery 100 including the battery cell 110 described above is described in this example, and the battery 100 may further include other functional components, which will not be repeated here.

The examples of the battery 100 in the present application are based on the examples of the battery cell 110 described above, and the examples of the battery 100 include all technical effects of the examples of the battery cell 110 described above, which will not be repeated here.

In some examples, an example of an electric device 1000 is disclosed. The electric device 1000 includes the battery cell 110 described in any one of the above examples or the battery 100 described in any one of the above examples.

In this example, the electric device 1000 includes, but is not limited to, a mobile phone, a portable device, a laptop, an electric bicycle, an electric vehicle, a ship, a spacecraft, an electric toy, an electric tool, etc. The battery cell 110 described in any one of the above examples may be separately installed in the electric device 1000, and the battery 100 described above may also be installed in the electric device 1000.

The examples of the electric device 1000 in the present application are based on the examples of the battery cell 110 or the battery 100 described above, and the examples of the electric device 1000 include all technical effects of the examples of the battery cell 110 or the battery 100 described above, which will not be repeated here.

In one example of the present application, a battery cell 110 is disclosed. The battery cell 110 includes a housing 120, and an electrode assembly 130 and an exhaust structure 160 disposed in the housing 120. The housing 120 has a first wall 121, the first wall 121 is provided with a pressure relief mechanism 140, and the exhaust structure 160 is disposed between the first wall 121 and the electrode assembly 130 and is used for suspending the electrode assembly 130 above the outer side of the first wall 121 to prevent the electrode assembly 130 from moving toward the first wall 121; the exhaust structure 160 is provided with a fluid channel 164, and the fluid channel 164 is used for being in communication with the pressure relief structure to enable the gas inside the battery cell 110 to flow toward the pressure relief mechanism 140. In this example, by providing the exhaust structure 160, in the case of the thermal runaway of the battery cell 110, the airflow in the battery cell 110 can flow toward the pressure relief mechanism 140 along the fluid channel 164, and the pressure relief mechanism 140 is actuated in time to relieve the pressure of the battery cell 110, thus reducing the problem of explosion of the battery cell 110 due to thermal runaway. In this example, the fluid channel 164 may allow the outer periphery of the electrode assembly 130 to be in communication with the pressure relief mechanism 140, such that the airflow outside the electrode assembly 130 flows toward the pressure relief mechanism 140 for reducing the temperature of the outer peripheral region of the electrode assembly 130; the fluid channel 164 may also be used for allowing the outer periphery of the exhaust structure 160 to be in communication with the pressure relief mechanism 140, such that the airflow at the outer periphery of the exhaust structure 160 may flow toward the pressure relief mechanism 140 along the fluid channel 164. Further optionally, in this example, the exhaust structure 160 includes a plate body 161 and a supporting block 163, where the plate body 161 is disposed between the electrode assembly 130 and the first wall 121, the supporting block 163 may be disposed at a side of the plate body 161 facing the first wall 121, and a fluid channel 164 may be formed at the outer periphery of the supporting block 163, such that a space for the flowing of gas can be formed at the side of the plate body 161 facing the first wall 121. In this example, the plate body 161 may also be provided with a via 162. The via 162 is disposed penetrating through the plate body 161 to allow the fluid channel 164 to be in communication with the side of the plate body 161 facing the electrode assembly 130. In this example, the battery cell 110 may further include an insulating film 150. The insulating film 150 wraps the electrode assembly 130 to provide insulation between the electrode assembly 130 and the housing 120, and the insulating film 150 may be connected to the plate body 161 to enable the exhaust structure 160 and the insulating film 150 to be maintained at preset positions. For convenience of installation, in this example, a first through hole 151 is provided on the insulating film 150, a second through hole 165 is provided on the exhaust structure 160, and the insulating film 150 and the exhaust structure 160 are positioned in such a manner that the first through hole 151 and the second through hole 165 are disposed aligned with each other. When the second through hole 165 is disposed on the supporting block 163 of the exhaust structure 160, the battery cell 110 may further include an insulating sheet 152, and the second through hole 165 is blocked by the insulating sheet 152 to block the moving of powders toward the second through hole 165.

The above description is only optional examples of the present application and is not intended to limit the patent scope of the present application. Any equivalent structural transformations made based on the content of this specification and drawings or any direct/indirect applications in other related technical fields under the inventive concept of the present application shall all fall within the scope of patent protection of the present application.

## Claims

1. A battery cell, wherein the battery cell comprises:
a housing, having an inner cavity and having a first wall;
an electrode assembly, disposed in the inner cavity; and
an exhaust structure, disposed between the first wall and the electrode assembly and provided with a fluid channel.

2. The battery cell according to claim 1, wherein the fluid channel is in communication with an edge of the exhaust structure in a first direction, and the first direction intersects with a thickness direction of the first wall.

3. The battery cell according to claim 2, wherein the housing comprises a second wall, a first gap is formed between an outer peripheral surface of the electrode assembly and the second wall, and the fluid channel is in communication with the first gap; and/or, a second gap is formed between an outer peripheral surface of the exhaust structure and the second wall of the housing, and the fluid channel is in communication with the second gap.

4. The battery cell according to any one of claims 2-3, wherein the exhaust structure comprises a plate body, the plate body comprises a first surface disposed along a thickness direction of the plate body, and the fluid channel is disposed on the first surface.

5. The battery cell according to claim 4, wherein the first surface is provided with a supporting block, and the fluid channel is formed around the supporting block.

6. The battery cell according to claim 5, wherein the first surface is provided with a plurality of supporting blocks, and the fluid channel is formed between the plurality of supporting blocks.

7. The battery cell according to claim 6, wherein the plurality of supporting blocks satisfy at least one of the following conditions:
the plurality of supporting blocks are arranged in an array;
the plurality of supporting blocks are arranged along a width direction of the plate body;
the plurality of supporting blocks are arranged along a length direction of the plate body; and
the supporting block is a rectangular block or a cylinder.

8. The battery cell according to any one of claims 5-7, wherein the plate body is provided with a via, the via penetrates through the plate body along the thickness direction of the plate body, and the via is in communication with the fluid channel.

9. The battery cell according to claim 8, wherein the via is arranged in an at least partially staggered manner relative to the supporting block.

10. The battery cell according to claim 9, wherein there are a plurality of columns of supporting blocks, with the via disposed between two adjacent columns of supporting blocks.

11. The battery cell according to any one of claims 5-10, wherein the first surface faces the first wall.

12. The battery cell according to claim 11, wherein the battery cell further comprises an insulating film; the insulating film is wrapped outside the electrode assembly, and the insulating film is provided with a first through hole; the exhaust structure is disposed between the insulating film and the first wall, the exhaust structure is provided with a second through hole, and the second through hole is aligned with the first through hole.

13. The battery cell according to claim 12, wherein the second through hole is disposed on the supporting block.

14. The battery cell according to claim 13, wherein the supporting block is a hollow structure protruding with respect to the plate body, the second through hole is disposed on a bottom wall of the supporting block, and the bottom wall of the supporting block abuts against the first wall.

15. The battery cell according to any one of claims 12-14, wherein the battery cell further comprises an insulating sheet, the insulating sheet comprises a first portion, and the first portion is disposed at least partially on a side of the exhaust structure distal to the electrode assembly and covers the second through hole.

16. The battery cell according to claim 15, wherein the first portion is attached at an opening of the second through hole.

17. The battery cell according to claim 15 or 16, wherein in the width direction of the plate body, the first portion is at a preset distance from at least one edge of the plate body in the width direction; and/or
in the width direction of the plate body, the supporting block is at a preset distance from at least one edge of the plate body in the width direction.

18. The battery cell according to any one of claims 15-17, wherein the insulating film is folded to wrap the electrode assembly and forms a first folded edge and a second folded edge overlapping each other at a side of the electrode assembly; the insulating sheet further comprises a second portion, the second portion is connected to the first portion, and the second portion fixes the first folded edge and the second folded edge.

19. The battery cell according to any one of claims 12-18, wherein the supporting block is provided independently from the plate body, and the second through hole penetrates through the supporting block and the plate body.

20. The battery cell according to any one of claims 15-18, wherein the supporting block is provided independently from the plate body;
the plate body is connected to the insulating film, or the supporting block, the plate body, and the insulating film are connected.

21. The battery cell according to any one of claims 12-20, wherein
a center of the second through hole is disposed on one side of a center line of the plate body in the length direction of the plate body; or
a center of the second through hole is disposed on one side of a center line of the plate body in the width direction of the plate body; or
the exhaust structure comprises a plurality of second through holes, the plurality of second through holes are disposed on both sides of the center line of the plate body in the length direction of the plate body, and the plurality of second through holes are asymmetric with respect to the center line of the plate body in the length direction; or
the exhaust structure comprises a plurality of second through holes, the plurality of second through holes are disposed on both sides of the center line of the plate body in the width direction, and the plurality of second through holes are asymmetric with respect to the center line of the plate body in the width direction.

22. The battery cell according to any one of claims 12-21, wherein the exhaust structure comprises a plurality of supporting blocks, and each of the supporting blocks is provided with the second through hole.

23. The battery cell according to any one of claims 11-18, wherein the supporting block is provided integrally with the plate body.

24. The battery cell according to claim 23, wherein the plate body comprises a second surface opposite to the first surface in the thickness direction of the plate body, and a recess is formed on the second surface at a position corresponding to the supporting block.

25. The battery cell according to claim 24, wherein the recess extends to an edge of the plate body.

26. The battery cell according to claim 24 or 25, wherein the supporting block comprises a bottom wall and a side wall, the bottom wall abuts against the first wall, the side wall is provided with a first hollow-through hole, and the first hollow-through hole is in communication with the recess.

27. The battery cell according to claim 26, wherein the first wall is provided with a pressure relief mechanism, and the first hollow-through hole allows the recess to be in communication with the pressure relief mechanism.

28. The battery cell according to any one of claims 24-27, wherein the supporting block comprises an edge supporting block, and the edge supporting block is disposed at an edge of the plate body.

29. The battery cell according to claim 28, wherein the recess is formed on the second surface at a position corresponding to the edge supporting block, and the recess extends at least to the edge of the plate body in the width direction.

30. The battery cell according to claim 28 or 29, wherein the edge supporting block is provided with a second hollow-through hole, and the second hollow-through hole penetrates through the edge supporting block along a direction intersecting with the thickness direction of the first wall.

31. The battery cell according to claim 30, wherein the first wall is provided with the pressure relief mechanism, and the second hollow-through hole is disposed opposite to the pressure relief mechanism.

32. The battery cell according to any one of claims 11-22, wherein the supporting block is provided independently from the plate body, and the supporting block is fixed to the plate body.

33. The battery cell according to claim 32, wherein an edge of the supporting block is at a preset distance from an edge of the plate body.

34. The battery cell according to claim 33, wherein in the width direction of the plate body, an edge of the supporting block is at a preset distance from an edge of the plate body.

35. The battery cell according to any one of claims 32-34, wherein the supporting block is in hot-melting connection to the plate body.

36. The battery cell according to claim 35, wherein a plurality of supporting blocks are provided, and a plurality of weld marks are formed on each of the supporting blocks and the plate body.

37. The battery cell according to claim 35 or 36, wherein the weld marks of the supporting block resulting from hot melting are exposed on a surface of the plate body distal to the supporting block.

38. The battery cell according to any one of claims 32-37, wherein a thickness of the plate body is smaller than a thickness of the supporting block.

39. The battery cell according to any one of claims 1-38, wherein the battery cell further comprises the pressure relief mechanism, the pressure relief mechanism is disposed on the first wall, and the fluid channel is used for allowing airflow in the inner cavity to flow toward the pressure relief mechanism.

40. The battery cell according to claim 39, wherein the exhaust structure comprises the plate body and the supporting block, the supporting block is disposed on a side of the plate body facing the first wall, the fluid channel is formed around the supporting block, and a projection of the supporting block on the first wall does not coincide with the pressure relief mechanism.

41. The battery cell according to claim 40, wherein the plate body is provided with a reinforcing rib at a position corresponding to the pressure relief mechanism.

42. The battery cell according to claim 41, wherein the reinforcing rib is disposed on the side of the plate body facing the first wall.

43. The battery cell according to claim 42, wherein the reinforcing rib extends to an edge of the plate body; and/or the reinforcing rib extends to an adjacent supporting block.

44. The battery cell according to claim 42 or 43, wherein in the thickness direction of the first wall, a height of the reinforcing rib is smaller than a height of the supporting block.

45. The battery cell according to any one of claims 41-44, wherein the reinforcing rib is provided integrally with the plate body, or the reinforcing rib is provided independently from the plate body and connected thereto.

46. The battery cell according to any one of claims 1-4 and 39, wherein the exhaust structure comprises the plate body, the plate body comprises the first surface disposed along the thickness direction of the plate body, and the fluid channel is a groove disposed on the first surface.

47. The battery cell according to any one of claims 1-4 and 39, wherein the exhaust structure comprises a plurality of sub-exhaust structures spaced apart from each other, and the fluid channel is formed between adjacent sub-exhaust structures.

48. The battery cell according to claim 47, wherein the battery cell further comprises the insulating film, the insulating film is wrapped outside the electrode assembly, and the insulating film is connected to the sub-exhaust structures.

49. The battery cell according to any one of claims 39-48, wherein the housing comprises the second wall, the second wall comprises a second sub-wall, and the second sub-wall is provided with an electrode terminal.

50. The battery cell according to claim 49, wherein the second sub-wall is opposite to the first wall, or the second sub-wall is connected to the first wall.

51. The battery cell according to claim 49 or 50, wherein the electrode assembly comprises a tab, and the tab faces the second sub-wall.

52. The battery cell according to any one of claims 49-51, wherein the second sub-wall is an end cover.

53. The battery cell according to any one of claims 1-45, wherein the exhaust structure comprises the plate body and the supporting block, the plate body comprises the first surface disposed along the thickness direction of the plate body, the supporting block is disposed on the first surface, the fluid channel is formed around the supporting block, and a size of the supporting block satisfies at least one of the following conditions:
the supporting block has a shape of a long strip, a length of the plate body is L0, a length of the supporting block is L1, and the length L1 of the supporting block is not smaller than 0.25L0;
along the thickness direction of the plate body, a thickness HO of the supporting block is not smaller than 0.1 mm and not greater than 5 mm; and
the supporting block has a shape of a long strip, a width of the plate body is A0, and a total width of the supporting block is not smaller than 0.2A0 and not greater than 0.8A0.

54. A battery, wherein the battery comprises the battery cell according to any one of claims 1-53.

55. An electric device, wherein the electric device comprises the battery cell according to any one of claims 1-53 or the battery according to claim 54.
